# EUROPÄISCHE PATENTSCHRIFT

(11) **EP 1 124 748 B1**
(45) Veröffentlichungstag und Bekanntmachung des Hinweises auf die Patenterteilung: **03.05.2006**
(21) Anmeldenummer: 99950418.6
(22) Anmeldetag: 28.10.1999
(51) Int. Cl.: B65H 54/28, H02K 41/03

(54) **FADENCHANGIERUNG**
YARN CHANGING METHOD
VA-ET-VIENT DE FIL

(30) Priorität: 28.10.1998 CH 217998
(43) Veröffentlichungstag der Anmeldung: 22.08.2001
(73) Patentinhaber: MASCHINENFABRIK RIETER AG, CH-8406 Winterthur (CH)
(72) Erfinder: SYNDIKUS, Heike, CH-8424 Embrach (CH); SCHAAD, Marc, CH-5600 Lenzburg (CH); BRODER, Beda, CH-8887 Mels (CH); LUTZ, Gebhard, A-6824 Schlins (AT)
(74) Vertreter: Bergmeier, Werner
(86) Internationale Anmeldenummer: PCT/CH1999/000508
(87) Internationale Veröffentlichungsnummer: WO 2000/024663

(56) Entgegenhaltungen:
- EP-A- 0 311 827
- EP-A- 0 347 626
- EP-A- 0 838 422
- WO-A-92/08664
- DE-A- 3 907 125
- DE-A- 19 623 771
- DE-A- 19 820 464
- US-A- 4 620 253
- US-A- 4 758 750
- US-A- 5 523 911
- PATENT ABSTRACTS OF JAPAN vol. 1996, no. 12, 26. Dezember 1996 (1996-12-26) -& JP 08 217332 A (MURATA MACH LTD), 27. August 1996 (1996-08-27)

## Beschreibung

Die vorliegende Erfindung betrifft eine Changierung mit einem Fadenführer, der über einen vorgebbaren Hub bewegt werden muss, insbesondere dann, wenn der Fadenführer auf einem drehbar gelagerten Arm, bzw. in der Form eines drehbar gelagerten Armes, kurz Schwenkarm, vorgesehen ist.

### Stand der Technik:

Das Grundprinzip ist sehr alt.

Der Arm, welcher im Folgenden als "Schwenkarm" bezeichnet wird, wurde auch früher an einem Endteil dreh- bzw. schwenk- und antreibbar angeordnet und am anderen Ende so ausgebildet, dass er den Faden kontrolliert führen kann. Ein solcher Arm ist aus der schweizerischen Patentschrift Nr. 153 167 sowie aus DE-C-11 31 575 bekannt.

In CH 153 167 ist der Arm für das Führen eines Fadens am freien Ende mit einem Faden führenden Gabetschlitz versehen und am anderen Ende schwenkbar gelagert. Der Antrieb erfolgt durch einen mechanischen Übertrieb aus dem Antrieb der Spule heraus. Der Faden wird über eine Leitstange geführt, wobei die Geometrie der Anordnung dieser festen Leitstange gegenüber dem sich während der Spülreise vergrössernden Durchmesser der Pakkung zu einer Hubverkürzung führen soll. Das Gerät ist zur Anwendung in einem modernen Spuler ungeeignet.

Der Gabelschlitz weist eine derart vorgegebene Länge auf, dass ein Faden innerhalb der vorgegebenen Länge des Gabelschlitzes aufgrund der Lage eines Leitlineales und der wachsenden Spule immer tiefer im Gabelschlitz geführt wird, wodurch eine Hubverkürzung des changierenden Fadens entsteht und zwar aufgrund der Verkürzung des Abstandes zwischen der Schwenkachse des Hebels und der Stelle, in welcher der Faden im Gabelschlitz geführt wird, um dadurch konische Enden der Spule zu erhalten. Mittels einer Kurvenscheibe und eines Hebels mit Abtastrolle, welcher mittels einer Pleuelstange den Fadenführerhebel antreibt, wird an den Enden der Spule der Schwenkarm beschleunigt bzw. verzögert.

EP-B-453 622 schlägt eine Vorrichtung mit einem Fadenführer und einem Fadenführerträger vor, wobei der Träger in einer Nut geführt ist. Die Vorrichtung umfasst auch einen Antriebsmotor und eine programmierbare Steuerung, wobei der Motor, während sich der Fadenführer in der Nähe eines Umkehrpunktes befindet, mit höherem als dem Nennstrom und, während sich der Fadenführer im übrigen Bereich befindet, mit einem unterhalb des Nennstromes liegenden Strom betrieben wird. Grundprogramme für verschiedene Wicklungsabschnitte sind in der Steuerung gespeichert. In der Steuerung erfolgt die Berechnung der Wege, Geschwindigkeiten und Beschleunigungen für die Motorbewegung aufgrund der zur Anwendung kommenden Wickelgesetze. Parameter, die gespeichert werden können, umfassen den Gründhub und die Grundhubvariationen zur Erzeugung weicher Spulenkanten.

Gemäss der als Beispiel dargestellten Ausführung arbeitet ein Schrittmotor als Antriebsmotor zwischen der Hubmitte und einem Umkehrpunkt gegen eine Torsionsfeder. In der Nähe eines Umkehrpunktes wird die Federkonstante erhöht, die Stromzufuhr an den Schrittmotor erhöht und die Frequenz seiner Ansteuerungsimpulse reduziert. Er soll somit im Umkehrpunkt zum Stillstand kommen. Eine entsprechende Überwachung ist nicht vorgesehen. Es ist ein Sensor in der Hubmitte vorgesehen, der das Erkennen allfälliger Fehler an dieser Stelle im Changierhub ermöglicht. Ein Changierhub wird stets von dieser Stelle aus mittels einer lmpulssequenz gesteuert. Die genaue Bestimmung der Umkehrpunkte ist aus der Schrift nicht zu entnehmen und sie ist allenfalls nicht möglich, weil sie sich aus den sich widerstrebenden Kräften des Motors und der Feder ergeben wird.

EP-B-556 212 (WO 92 086 64) zeigt in Fig. 4 eine Changierung mit einem Fadenführer am freien Ende eines drehbar gelagerten Schwenkarms. Gemäss dem Hauptanspruch befasst sich diese Schrift mit einem Verfahren, wonach der Packungsaufbau durch Steuern der Beziehung zwischen der Drehung der Wicklung und der Geschwindigkeit der Verschiebung des Fadens gesteuert Wird. Dies soll durch eine die Drehung der Wicklung steuernde Rückführungsanordnung bewerkstelligt werden. In der Beschreibung wird das Steuern der Geschwindigkeit der Fadenverschiebung während einer einzigen Hubbewegung betont. Es wird aber nichts über die Bestimmung der Umkehrpunkte dieser Bewegung gesagt.

Aus der EP-0 838 422A1 ist ein finger- bzw. zeigerförmig geformter Fadenführer bekannt, welcher an einem Ende auf einem Motor antreibbar angeordnet und am anderen Ende mit einem Schlitz zur Führung eines Fadens ausgestattet ist. Der Motor wird aufgrund einer vorprogrammierten Steuerung für das Schwenken des Schwenkarms und damit für das Changieren des Fadens gesteuert und die Schwenkbewegung des Schwenkarms wird mit Hilfe eines fotoelektrischen Sensors kontinuierlich überwacht, wobei bei Abweichungen von einem vorgegebenen Bewegungsprogramm die Schwenkbewegung korrigiert wird. Der Sensor spricht auf optisch abtastbare Markierungen an.

Um das Verzögern und Beschleunigen des Schwenkarms an den Hubenden zu unterstützen, sind auf einem ebenfalls schwenk- und antreibbaren Träger Energiespeicher, beispielsweise Federn, vorgesehen, welche beim Verzögern des Schwenkarms mit Energie aufgeladen und beim Beschleunigen des Schwenkarms entladen werden. Der Träger ist mittels eines Antriebes schwenkbar vorgesehen und der Antrieb wird mittels der Steuerung derart gesteuert, dass die Lage der Energiespeicher veränderbar ist, so dass der Energiespeicher sich an den zu verwendenden Hub, beispielsweise für den Aufbau der Spule, anpassen kann.

Die Changierung nach EP-A-838 422 ist zur Verlegung eines Fadens konzipiert, der von einer Vorratsspule abgezogen wird. Daraus soll eine Präzisionswicklung gebildet werden. Der die Position des Schwenkarms überwachende fotoelektrische Sensor bezieht seine Überwachung immer auf eine Ausgangsposition des Fadenführers, vorzugsweise auf den Nullpunkt von dessen Schwenkbewegung. Die erfolgt dadurch, dass der Fadenführer zuerst an den einen und dann an den anderen Umkehrpunkt gebracht wird, wobei der Sensor die diesem Hub entsprechende Anzahl der Markierungen zählt und daraus den Nullpunkt berechnet. In EP-A-838 422 ist nicht erklärt, wie die Umkehrpunkte festgelegt sind. Der Hub des Fadenführers soll durch den Hub der Schwenkbewegung des vorerwähnten Trägers definiert werden und der letztere Hub soll durch einen zweiten Sensor überwacht werden. Die Koordination der Bewegungen des Trägers und des Schwenkarms ist erwähnt, aber nicht erklärt worden. Gemäss der Beschreibung dient auf jeden Fall die Einstellbarkeit der Energiespeicher dazu, eine "einfache Änderung" des Hubes des Fadenführers zu ermöglichen. Dazu soll die Anordnung der Energiespeicher auf dem oszillierend antreibbaren Träger eine Änderung des Hubes des Fadenführers durch eine blosse Änderung des Hubes des Trägers und ohne mechanische Verstellung der Position der Energiespeicher ermöglichen.

Es ist anzunehmen, dass die Positionen der Umkehrpunkte mit den Positionen der Energiespeicher zusammenhängen. Die Positionen der Energiespeicher können über die Steuerung beeinflusst werden.

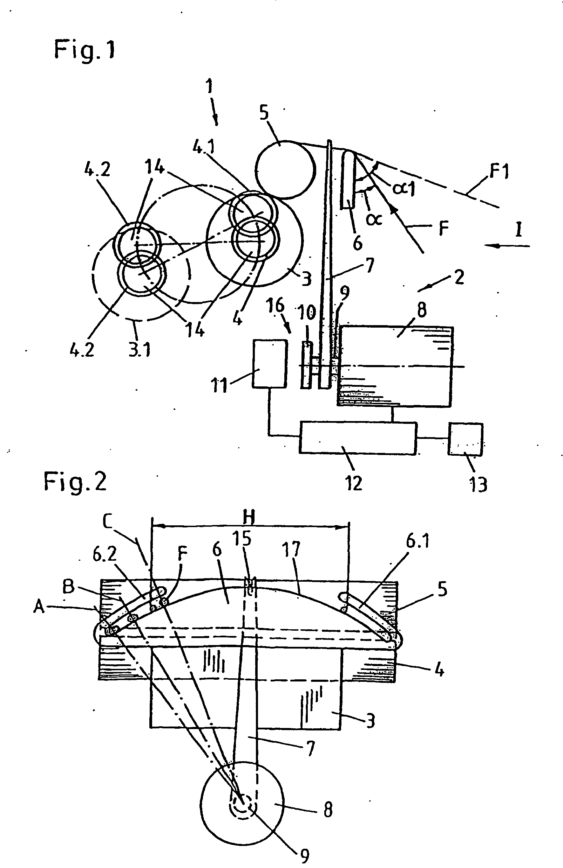

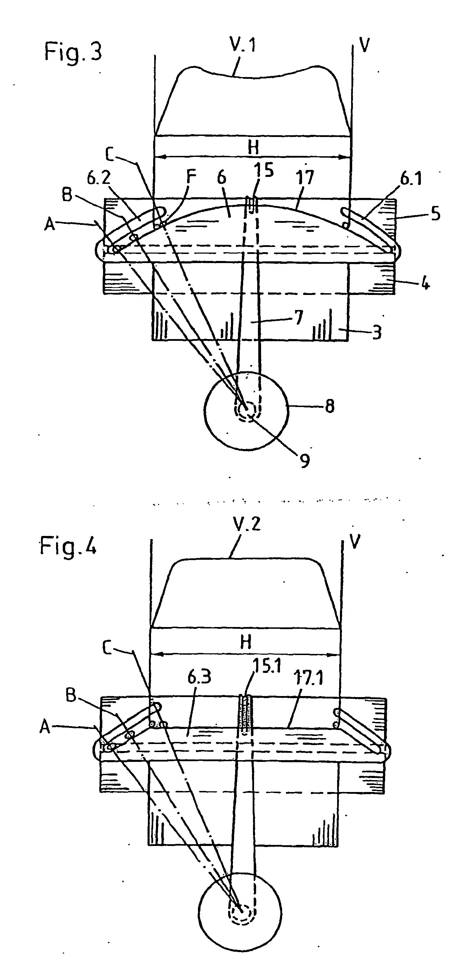

DE-A-196 23 771 zeigt eine Changierung mit mindestens einer Führungsschiene (Fig. 1/2) und gegebenenfalls zwei Führungsschienen (Fig. 3/4) für den Fadenführer. In einer Variante (Fig. 1/2) kann die Führungsschiene als der Stator eines linearen Servomotors gebildet werden, wozu sie mit Magneten versehen werden kann. In der anderen Variante ist ein Schwenkarm vorgesehen, um die Changierbewegung auf den Fadenführer zu übertragen, wozu eine "gelenkige Verbindung" zwischen dem Schwenkarm und dem Fadenführer erforderlich ist. Über die Bestimmung der Umkehrpunkte ist in DE-A-196 23 771 nichts zu finden. Wie der lineare Servomotor arbeiten sollte, ist auch nicht aus dieser Schrift zu ermitteln.

Die DE 95 30 51 C zeigt eine magnetische Changieivorrichtung für Fadenführer an Spulmaschinen. Hierbei ist ein Fadenführer, welcher mit einer Gabei oder Öse versehen ist, mit Hilfe eines Führungsteiles auf einer Gleitstange verschiebbar angeordnet. Das Führungsteil trägt auf einer Seite einen Permanentmagneten. Parallel zur Gleitstange und dem Führungsteil mit dem Permanentmagneten gegenüberliegend ist auf einer Welle eine Trommel drehbar gelagert. Auf dem Umfang der Trommel sind an je einer auf- und ablaufenden Schraubenlinie eine Anzahl von Permanentmagneten angeordnet. Die Trommel wird angetrieben, so daß durch eine Wechselwirkung der Permanentmagnete auf der Trommel mit dem Magneten des Fadenführers eine lineare Bewegung des Fadenführers auf der Gleitstange erzeugt wird. An den Enden der Gleitstangen sind elastische Puffer angeordnet, um die Umkehr des Fadenführers an den Hubenden zu unterstützen.

Die EP 0 347 626 beschreibt einen hebelartigen Fadenführer, welcher beispielsweise an Strickmaschinen angeordnet ist. Um das Garn einem Einfädler oder einer Nadel zuzuführen, ist der Hebel mit dem Fadenführer aus einer Bereitschaftsstellung in eine niedrigere Übergabeposition überführbar. Der Hebel ist mit Hilfe eines Linearmotors zwischen den beiden Positionen schwenkbar. Die Bewegung des Hebels kann durch entsprechende Sensormittel erfaßt werden.Mittels diese Vorrichtung kann lediglich die Übergabeposition beeinflußt werden, um beispielsweise einen Fadenbruch durch einen Garnknoten zu verhindern.

Die US 5,523,911 beschreibt eine Vorrichtung zur Positionierung des Lesekopfes eines Disketten-Laufwerkes. Um den Arm, welcher den Lesekopf trägt, um seinen Drehpunkt bewegen zu können, ist auf dem Arm eine Leiterwindung angeordnet, welche mit einer Anordnung aus Permanentmagneten zusammenwirkt. Mittels verschiedener Anordnungen aus Permanentmagneten und Motorwindungen soll ein möglichst gleichförmiges Drehmoment erzeugt werden und die Gefahr von Lesefehlem oder der Zerstörung von Daten auf der magnetischen Diskette vermindert werden.

JP 7-165368 zeigt eine Changierung mit einem "Linearmotor". Der Aufbau dieses Motors bzw. die Art und Weise, wie er mit dem Fadenführer zusammenwirkt, ist aus der Beschreibung bzw. der Darstellung nicht ersichtlich.

JP 7-137935 beschreibt einen Linearmotor, wovon ein Schlitten (mit einem Fadenführer) einer Stange entlang hin und her fährt, wobei das magnetische Feld durch die Stange geleitet wird. Es sind Federn an den Umkehrstellen vorgesehen.

JP 7-137934 beschreibt eine ähnliche Anordnung, wobei die Feder durch Sensoren ersetzt werden, die mit einer Zeitsteuerung zusammenarbeiten, um die Umkehr auszulösen.

Der Aufbau des Linearmotors ist aus den letztgenannten Schriften nicht klar ersichtlich.

### Die Erfindung:

Die Aufgabe der Erfindung liegt darin, Nachteile des Standes der Technik zu beseitigen und eine exaktere Positionierung des Schwenkarmes bei der Fadenverlegung zu erreichen.

Die Lösung liegt darin, dass eine den Schwenkarm bewegende und/oder bremsende Kraft als Hilfskraft oder alleinige Kraft direkt auf dem Schwenkarm erzeugt wird. Dies wird dadurch erreicht, daß der Schwenkarm mit mindestens einem Element versehen ist, das mit einem felderzeugenden Mittel zusammenarbeitet und hierdurch eine Art Linearmotor bildet. Hierdurch kann insbesondere die Umkehrbewegung des Schwenkarmes exakter durchgeführt werden. Im weiteren kann der Antrieb für den Schwenkarm bzw. seine Halterung mit einer programmierbaren Steuerung versehen sein und die Umkehrstellen für die Hubbewegung sowie andere funktionsrelevante Positionen können in dieser Steuerung festgelegt werden können. Die Festlegung könnte dadurch erfolgen, dass die Umkehrstellen direkt eingegeben werden. Vorzugsweise werden aber Spulparameter eingegeben, aus welchen die Steuerung die Umkehrstellen anhand ihrer Programmierung ermitteln kann. Die Positionen der Umkehrstellen können während eines Aufwindezyklus geändert werden. Die Anordnung ist derart getroffen, dass der gesteuerte Antrieb die Umkehr an einer gewählten Umkehrstelle gewährleisten kann. Das Einhalten der erforderlichen Umkehrgenauigkeit kann durch eine geeignete Sensorik überwacht und an die Steuerung gemeldet werden. Die Annäherung an und allenfalls das sich Entfernen von einer Umkehrstelle kann insbesondere überwacht werden, um Fehler an diesen Stellen zu erkennen. Die Umkehrstellen des Schwenkarmes entsprechen den Umkehrpunkten der Halterung. Die Steuerung kann daher derart ausgelegt werden, dass die oszillierende Bewegung der Halterung direkt gesteuert wird. Daraus ergibt sich die Hubbewegung eines auf dem Schwenkarm vorgesehenen Fadenführers.

Der Schwenkarm wird bezüglich Form und Gewicht vorzugsweise derart gestaltet, dass der den Schwenkarm antreibende Motor entsprechend einem für einen vorgegebenen Spulenaufbau vorgegebenen Steuerprogramm beschleunigt und verzögert werden kann. In einer ersten bevorzugten Ausführungsform wird der Querschnitt des Schwenkarms gemäss einem Polynom mindestens ersten Grades und vorzugsweise zweiten Grades gebildet, so dass man einen linear ansteigenden Mässenträgheitsmomentenverlauf von der Drehachse zur Schwenkarmspitze erhält.

In einer weiteren bevorzugten Ausführungsform weist der Querschnitt des Schwenkarmes, in Bewegungsrichtung, eine grössere Dimension auf als senkrecht dazu, ebenso bevorzugt ist der Querschnitt über mindestens einen vorgegebenen Längsbereich des Schwenkarmes hohl und ebenfalls bevorzugt, ist dieser hohle Bereich mit einem Füllstoff gefüllt, dessen spezifisches Gewicht kleiner ist als dasjenige der Wände des hohlen Bereiches.

Weiter ist es vorteilhaft, wenn der Schwenkarm aus mehr als einem Teil besteht, indem vorteilhafterweise am fadenführenden Ende des Schwenkarmes ein ein- oder angesetztes Fadenführelement vorgesehen ist.

Weiter ist es vorteilhaft, den Schwenkarm mindestens teilweise aus einem Kohlenfaserverbundwerkstoff zu fertigen. Ausserdem ist vorzugsweise der Schwenkarm in einen tragenden Teil und einen daran vorgesehenen fadenführenden Teil aufgeteilt. Der tragende Teil kann in Sandwichbauweise oder als Hohlprofil gefertigt werden, wobei auch eine (äussere) Schale des tragenden Teils aus separat gebildeten Elementen zusammengesetzt werden kann.

Durch die günstige Ausgestaltung des Schwenkarmes und des Antriebs besteht eine mögliche Verwendung dieses Schwenkarmes darin, dass der Schwenkarm den Faden innerhalb des Hubes mit einer variablen Hublänge verlegen kann und ausserhalb des Hubes eine vorgegebene Funktion oder mehrere vorgegebenen Funktionen erfüllen kann, z.B. die Funktion des Einzugs und des Spulenwechsels, indem er ausserhalb des Hubes positioniert werden kann und zwar derart, dass der Schwenkarm an einer Stelle für das Fangen des Fadens in einem Fangschlitz oder Fangmesser an der Hülse oder Spulendorn und zur Bildung einer Fadenreserve auf einem Hülsenende stillgesetzt wird. Im weiteren kann der Schwenkarm zur Bildung eines Endwulstes auf der fertigen Spule auch innerhalb des Hubes stillgesetzt werden. All diese beschriebenen Positionen inkl, des Hubes selbst sind Teile eines Arbeitsbereiches des Schwenkarmes.

Die oszillierende Drehbewegung der Halterung umfasst vorzugsweise einen vorbestimmten Drehwinkel z.B. zwischen 45° und 90°, beispielsweise 60°. Die Länge des Schwenkarmes kann in Abhängigkeit von der gewünschten. Hubbreite gewählt werden.

Die den Fadenführer bewegende Kraft kann unmittelbar auf dem Fadenführer oder auf einem den Fadenführer tragenden Element erzeugt werden. Es ergibt sich z.B. daraus ein. Changieraggregat mit einem bewegbaren Fadenführer, dadurch gekennzeichnet, dass ein stationäres Mittel vorgesehen ist, um eine Bahn in der Form eines (elektro)magnetischen Feldes zu erzeugen, und dass der Fadenführer bzw. sein Träger mit einem krafterzeugenden Mittel versehen ist, welches mit dem Feld zusammenwirken kann, um den Fadenführer der Bahn entlang über einen vorgegebenen Hub hin und her zu bewegen.

Die gleichen Konstruktions-, Antriebs-, Steuer- und Regelprinzipien, wie hier am Beispiel eines Changieraggregats beschrieben, können allgemein auch für alle anderen Einsatzgebiete, bei denen ein Schwenkarm eine Schwenkbewegung über einen vorgegebenen Arbeitsbereich ausführen muss, angewandt werden, wobei es sich beim genannten Arbeitsbereich um einen Hub (d.h. Hin- und Herbewegung des Schwenkarmes um eine Drehachse) und um weitere Positionen innerhalb und/oder ausserhalb des Hubes handelt.

Im folgenden wird die Erfindung anhand von in den Zeichnungen dargestellten Ausführungsbeispielen näher erläutert: Es zeigt:
- Fig. 1: eine Spulmaschine mit einem erfindungsgemässen Schwenkarm und einer erfindungsgemässen Anwendung des Schwenkarmes, je schematisch dargestellt,
- Fig. 2: die Spulmaschine von Fig. 1 in Blickrichtung 1 von Fig. 1 dargestellt,
- Fig. 3: die Ansicht von Fig. 2 jedoch zusätzlich mit einem Geschwindigkeitsverlauf des Schwenkarmes während des Hubes,
- Fig. 4: eine Variante der Ansicht von Fig. 2, ebenfalls zusätzlich mit dem Geschwindigkeitsverlauf des Schwenkarmes während des Hubes,
- Fig. 5: ein Diagramm zur Erklärung der Programmierung der Motorsteuerung in einer Variante nach Fig. 1, 2, 3 oder 4,
- Fig. 6: eine perspektivische Darstellung einer weiteren Variante,
- Fig.7: eine diagrammatische- Darstellung einer Elektronikeinheit zur Verwendung in einer Variante nach Fig. 6,
- Fig. 8: ein Diagramm zur Erklärung der Programmierung der Elektronikeinheit bzw. deren Beziehung zu den Bewegungen des Fadenführers,
- Fig. 9: schematisch einen Plan eines Schwenkarms gemäss der Erfindung,
- Fig. 10: einen Querschnitt einer ersten Variante eines Schwenkarms nach Fig. 9,
- Fig. 11: einen Querschnitt einer zweiten Variante eines Schwenkarms nach Fig. 9,
- Fig. 12: einen Querschnitt durch einen Teil der Variante nach Fig. 6 mit dem Schwenkarm an seiner Umkehrstelle,
- Fig. 13: ein Diagramm zur Erklärung gewisser Spulparameter, die in die Steuerung eingegeben werden können,
- Fig. 14: ein Diagramm zur Erklärung eines Beispiels der Ausnutzung der Fähigkeiten der neuen Changierung, und
- Fig. 15A: je eine Variante eines Antriebs für eine Mehrfachchangierung gemäss der Fig. 15B Erfindung
- Fig. 16: schematisch eine weitere Ausführung nach der vorliegenden Erfindung,
- Fig. 17: einen Schwenkarm zur Verwendung in einer Ausführung nach Fig. 16,
- Fig. 18: noch eine Ausführung nach der Erfindung, und
- Fig. 19 -: einen Schlitten zur Verwendung in einer Variante nach Fig. 18,
- Fig. 20: in den Skizzen 20A, 20B und 20C drei verschiedene Varianten des Fadenführers, und
- Fig. 21: in den Skizzen 21A, 21B, 21C und 21D vier verschiedene Varianten der Verbindung zwischen dem Schwenkarm und dem Antriebsmotor.

Die Fig. 1 zeigt schematisch einen Querschnitt durch eine Spulmaschine 1, in welcher mittels einer Changiervorrichtung 2 ein Faden F zu einer Spule 3 aufgebaut wird. Die Spule 3 baut sich auf einer Hülse 4 auf, welche von einem Spulendom 14 aufgenommen ist.

Der Antrieb der Spule 3 erfolgt entweder über einen Antrieb des Spulendomes 14 (nicht gezeigt) oder mittels einer Reibwalze oder Kontaktwalze 5. Die Reib- oder Kontaktwalze (bei angetriebenem Spulendom) hat ausserdem noch die Funktion, den Faden von einem changierenden Fadenführer 7, hier Schwenkarm 7 genannt, zu übernehmen. Der Schwenkarm 7 ist zwischen oder vor einem Leitlineal 6 und der Reibwalze bzw. Tachowalze 5, angeordnet, wobei das Leitlineal 6 beispielsweise in der Art der folgenden Figuren 2 bzw. 3 und 4 gestaltet werden kann.

Die Spule 3 mit der Hülse 4 ist in Arbeitsposition gezeigt, wobei zusätzlich eine bei Beginn eines Spulenaufbaus in Arbeitsposition befindliche leere Hülse 4.1 an der Reib- bzw. Tachowalze 5 anliegend gezeigt ist, während mit 4.2 leere Hülsen in Warteposition gezeigt sind. Diese beiden Wartepositionen sind die Ausgangspositionen für eine mit strichpunktierter Linie gezeigten Drehbewegung eines sogenannten Revolverantriebes, mittels welchem die leeren Hülsen an die Reibwalze bzw. die volle Spule 3.1 von der Reibwalze weg in eine Wegnahmeposition bewegt werden.

Der Schwenkarm 7 ist mit dem formmässig grösseren und gewichtsmässig schwereren Ende auf einer Motorwelle 9 eines Motors 8 drehfest befestigt, wobei der Motor 8 von einer Steuerung 12 entsprechend eines Hubprogrammes für den Aufbau einer Spule gesteuert ist. Die Eingabe eines solchen Programmes in die Steuerung geschieht über ein Eingabegerät 13.

Zur Kontrolle der Bewegung des Schwenkarms 7 ist ein Bewegungsüberwachungsgerät 16 vorgesehen, bestehend aus einem fest mit der Motorwelle 9 verbundenen Signalgeber 10 und einem davon getrennt angeordneten Signalempfänger, welcher seine empfangenen Signale der Steuerung 12 abgibt.

Entsprechend der Gestaltung des Leitlineales 6, wie dies mit den Figuren 2 und 4 gezeigt ist, kann der Faden F je nach dem mit einem Anstellwinkel α oder α1 vorgesehen werden, wobei diese Anstellwinkel derart vorgesehen werden müssen, dass der. Faden F nie vom Leitlineal 6 abgehoben wird, es sei denn, das Leitlineal weise, wie in den Figuren 2 bis 4 gezeigt, Gegenlineale 6.1 bzw. 6.2 auf, welche den Faden derart führen, dass der Faden nie aus einem Führungsschlitz 15 bzw. 15.1 des Schwenkarms 7 gehoben wird. Die Gestaltung des Lineales 6, inkl. der Gestaltung der Gegenlineale 6.1 bzw. 6.2, ist je nach Anordnung des Leitlineals, gegenüber dem Schwenkarm 7 und der Reibwalze bzw. Tachowalze 5 durchführbar, d.h. die Gestaltung des Leitlineales 6 ist nicht auf die Darstellungen in den Figuren 2 - 4 eingeschränkt.

Der Fadenlauf entsprechend dem Ansteliwinkel α.1 ist mit F.1 und der Fadenlauf entsprechend dem Anstellwinkel α ist mit F gekennzeichnet. Die Wahl oder die Notwendigkeit der entsprechenden Lage hängt mit der vorgenannten Gestaltung des Leitlineals zusammen, oder umgekehrt.

Die Fig. 2 zeigt die Spulmaschine 1 in Blickrichtung I, wobei der Einfachheit halber das Eingabegerät 13 und die Steuerung 12 nicht dargestellt sind. Mit der Fig. 2 soll erstens dargestellt werden, dass der Schwenkarm 7 nicht nur innerhalb des Hubes H hin- und herbewegt werden kann, sondern dass der Faden F einerseits für den Spulenwechsel mittels des Schwenkarms 7 in der Stellung C stillgesetzt werden kann, um auf der fertigen Spule einen sogenannten Endwulst zu bilden.

Im weiteren kann der Schwenkarm 7 für einen Fadeneinzug bei Beginn eines Spulvorganges oder beim Spulenwechsel in der Position A und B ausserhalb des Hubes H stillgesetzt werden und zwar einerseits in der Position A, um den Faden in einer Position zu halten, in welcher dieser von einem Fangmesser oder Hülsenkerbe einer nächstfolgenden Hülse gefangen werden kann, während die Stellung B dazu dient, den Faden auf der neuen Hülse in einer Position zu halten, in welcher der Faden eine Reservewicklung auf das Hülsenende bilden kann. Anschliessend wird der Faden F durch den Schwenkarm 7 in den Hub H geführt und weiter innerhalb des Hubes hin- und herchangiert.

Daraus ist ersichtlich, dass der Schwenkarm dieser Variante nicht nur an den Enden des Hubes ohne äussere Hilfsmittel verzögert bzw. beschleunigt werden kann, sondern dass der Schwenkarm sehr rasch in Positionen gebracht werden kann, in welchen dieser für einen kurzen Moment stillsteht, um anschliessend wieder mit hoher Geschwindigkeit in einen weiteren Funktionsbereich verschoben bzw. beschleunigt zu werden.

Die Fig. 3 zeigt zusätzlich einen Geschwindigkeitsverlauf des Schwenkarms 7. Dieser gezeigte Geschwindigkeitsverlauf ist je nach Art des Spulenaufbaus unterschiedlich, weshalb der gezeigte Geschwindigkeitsverlauf keine Einschränkung für den möglichen Geschwindigkeitsverlauf des Schwenkarms 7 darstellt.

Die Fig. 4 zeigt eine Variante des Leitlineales 6, indem einerseits das Leitlineal 6.3 gegenüber dem Leitlineal 6 der Fig. 2 und 3 eine gestreckte Führungsbahn 17.1 aufweist und andererseits der Faden F in einem verlängerten Führungsschlitz 15.1 des Fadenführers 7 geführt ist. Dabei besteht durchaus die Möglichkeit, je nach Spulenaufbau und Changiergeschwindigkeitsverlauf und Anordnung der Reibwalze bzw. Tachowalze 5 relativ zum Schwenkarm 7 und relativ zum Leitlineal 6 andere Leitünealformen vorzusehen.

Im weiteren besteht die Möglichkeit für den Schwenkarm, zur optimierten Gestaltung der Spule, einen variablen Drehwinkel als Umkehrpunkt gemäss der Steuerung zu wählen.

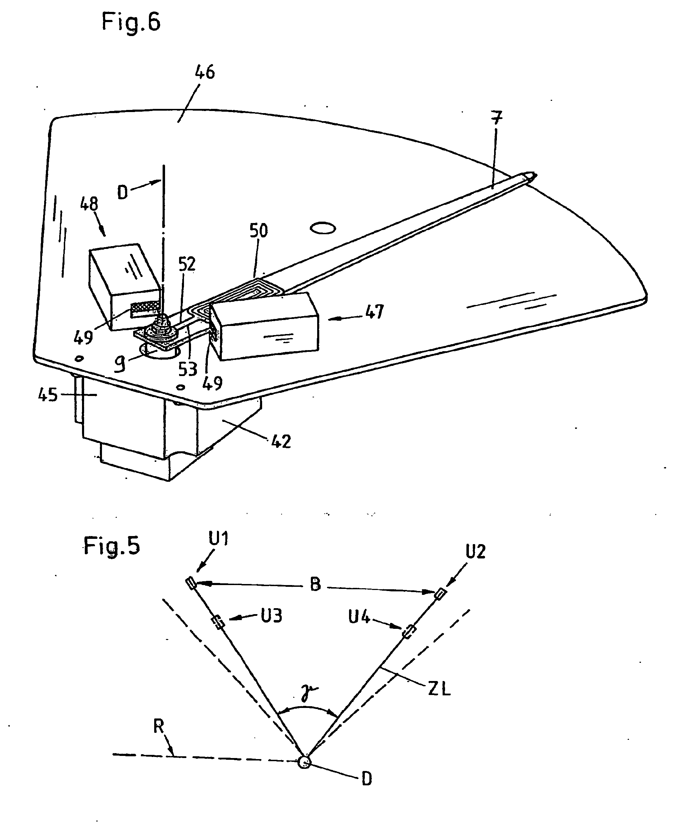

Fig. 5 zeigt diagrammatisch die Drehachse D des Schwenkarms 7 sowie die Umkehrstellen U1, U2 einer bestimmten Changierbewegung des Fadenführers 15 mit Hublänge B. Die Längsachse ZL des Schwenkarms 7 muss um die Achse D durch einen Winkel γ geschwenkt werden, um die Changierbewegung zu erzeugen. Diese Bewegung kann in die Steuerung 12 einprogrammiert werden, wobei die Umkehrstelle z.B. gegenüber einer Referenzlinie R definiert werden. Der Sensor 10 (Fig.1) bzw. die Auswertung in der Steuerung 12 kann derart ausgelegt werden, dass der Motor 8 durch die Steuerung an einer vorgegebenen Umkehrstelle (U1 bzw. U2) seine Drehung umkehrt. Die Ist-Position des Schwenkarms 7 ist über das Bewegungsüberwachungsgerät 16 stets bekannt und kann von der Steuerung 12 mit den vorgegebenen Umkehrstellen verglichen werden, um die Umkehr jeweils an der gewünschten Stelle zu ermüglichen.

Die vorgegebenen Umkehrstellen U1, U2 können (innerhalb vorgegebener Grenzen) über das Eingabegerät 13 geändert werden, wie nachfolgend näher erklärt wird. Dies ist schematisch mit den gestrichelten Linien in Fig. 5 angedeutet. Es muss allenfalls die Drehgeschwindigkeit des Schwenkarmes geändert werden, z.B. wenn die Lineargeschwindigkeit des Fadenführers konstant bleiben muss. Es kann z.B. auch ein Spulenaufbauzyklus eingegeben werden, womit der Hub während des Spulenaufbaus geändert werden kann. Zum Aufbauzyklus gehört z.B. auch die Definition einer damit verbundenen Fadenfangposition, wie schon beschrieben. Die Eingabe kann z.B. anhand von vorbestimmten Spulparameter erfolgen. Die Bedienungsperson wird zum Beispiel von der Steuerung 12 dazu aufgefordert, die erforderlichen Parameter einzugeben, bevor ein Spulzyklus gestartet werden kann.

Die Figuren 1 bis 5 stellen daher eine erste Variante dar, wonach die Umkehr an vorgegebenen Umkehrstellen U1, U2 (aber möglicherweise auch an anderen Stellen) durch den Motor ohne zusätzliches Hilfsmittel bewerkstelligt wird. Fig. 6 zeigt eine Variante, wonach Hilfsmittel vorgesehen sind, wobei aber die Umkehrstellen trotzdem von der programmierten Steuerung bestimmt werden. Die Anordnung nach Fig. 5 bildet daher eine Ausgangslage auch für die Variante nach Fig. 6, wobei gewisse Unterschiede im Laufe der weiteren Beschreibung ersichtlich werden.

Fig. 6 zeigt schematisch einen Schwenkarm 7 und eine Antriebs-/Steuerungseinheit 42. Der Schwenkarm 7 ist an der Welle 9 eines Antriebsmotors befestigt, so dass der Schwenkarm sich mit der Welle um die Längsachse D der Welle 9 dreht.

Auf dem Gehäuse 45 der Einheit 42 ist ein Trägersegment 46 befestigt, das zwei Joche 47, 48 trägt. Jedes Joch 47, 48 weist einen U-förmigen Querschnitt auf, der über die Länge des Joches konstant bleibt. Ein erster Schenkel des Joches sitzt satt auf dem Träger 46 auf, der zweite Schenkel ist an seiner Innenseite mit einem Permanentmagnet 49 versehen. Die Joche 47,48 sind vorzugsweise aus einem ferromagnetischen Material gebildet. Die Joche 47, 48 sind auf dem Träger 46 in fest vorbestimmten Positionen montiert, d.h. die Permanentmagnete 49 weisen je eine fest vorbestimmte Winkelstellung gegenüber der Drehachse D auf. Die Positionen der Magnete 49 sind derart gewählt, dass der Schwenkarm 7 zwischen den Schenkeln eines Jochs 48, 50 eindringen muss, um die entsprechende Umkehrstelle zu erreichen, wie nachfolgend anhand weiterer Figuren erklärt wird.

Der Schwenkarm 7 ist mit einer Spule 50 aus elektrisch leitendem Material versehen und zwar an einer derartigen Stelle, dass die Spule 50 in einem Joch 47, 48 liegt, wenn der Schwenkarm 7 die entsprechende Umkehrstelle erreicht. Wenn die Spule 50 in das von einem Magnet 49 erzeugte Feld eindringt, entsteht in der Spule 50 eine elektrische Kraft, die bei kurzgeschlossenen Enden der die Spule bildenden Leitern ein Wirbelstrom in der Spule 50 verursacht. Das dadurch erzeugte elektrische Feld widersetzt sich dem weiteren Eindringen in das stationäre magnetische Feld im Joch, was sich als eine Bremskraft auf dem Schwenkarm 7 äussert. Die Grösse der Bremskraft ist von der Stärke des magnetischen Feldes, der Geschwindigkeit des Schwenkarms 7 und der Anzahl Leiterwindungen in der Spule 50 abhängig. Diese Parameter sind derart gewählt, dass das vom Motor ausgehende Bremsen des Schwenkarms 7 beim Annähern einer Umkehrstelle unterstützt wird, wobei die Position des Schwenkarms 7 jederzeit durch die Motorsteuerung bestimmt wird:

Der Steg des Jochs bildet nun eine Grenze für das Weiterbewegen des Schwenkarms 7 in einer bestimmten Richtung. Die Bodenflächen der Joche 47, 48 verlaufen ungefähr radial gegenüber der Drehachse D. Diese Flächen bilden aber keine Anschläge für den Schwenkarm 40. Die programmierten Umkehrstellen (vgl. Fig. 5) liegen im vom Feld durchströmten Bereich vor dieser Grenze, d.h. der Schwenkarm wird vom Motor zurückbewegt, sobald die in der Steuerung 12 (vgl. Fig. 1) vorgegebene Umkehrstelle erreicht wird.

Diese Rückbewegung kann aber durch die Wechselwirkung zwischen dem Magnetfeld und der Spule 50 unterstützt werden, indem ein Stromstoss in der Spule erzeugt wird. Das dadurch erzeugte elektrische Feld arbeitet mit dem Magnetfeld mit, um den Schwenkarm 7 in seiner Bewegung aus dem Joch 47 bzw. 48 zu beschleunigen. Die elektromagnetischen Kräfte unterstützen daher die vom Motor ausgehenden Drehmomente, wobei die Position des Schwenkarms 7 stets vom Gerät 16 (vgl. Fig. 1) überwacht wird und die Bewegungen des Schwenkarms 7 dementsprechend von der Steuerung über den Motor bestimmt werden. Das heisst, z.B. dass wenn die elektromagnetischen Kräfte in einem bestimmten Fall dazu neigen, den Schwenkarm 7 zu schnell wieder aus dem Joch 47 bzw. 48 zu schleudern, der Motor eher eine bremsende als eine antreibende Wirkung erzeugen muss, so dass der Schwenkarm 7 gemäss dem Steuerungsprogramm bewegt wird.

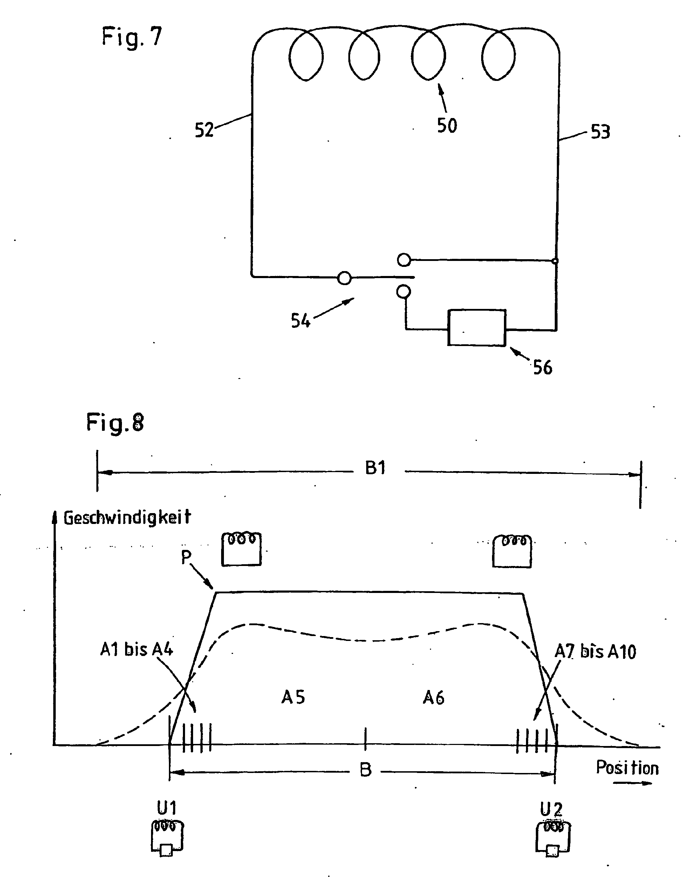

Die Spule 50 ist über Verbindungsleiter 52, 53 mit einem steuerbaren elektronischen Schalter 54 (Fig. 7) verbunden, welcher wahlweise die Enden der Spulenteiter miteinander verbindet (kurzschliesst) oder mit einer Energiequelle 56 verbindet. Der Schalter 54 wird von der Steuerung 12 in Abhängigkeit einerseits von der momentanen Position des Schwenkarms 7 und andererseits vom programmierten Hub getätigt. Die Energiequelle 56 könnte z.B. ein Kondensator sein, der sich über die Spule 50 entlädt, wenn der Schalter 54 entsprechend getätigt wird und sich wieder aus dem Netz bzw. aus einer Batterie (nicht gezeigt) auflädt, nachdem der Schwenkarm 7 sich aus dem Joch 47 bzw. 48 entfernt hat. Im Prinzip könnte die beim Bremsen des Schwenkarms 7 erzeugte elektrische Energie gespeichert und wiedergewonnen werden. Die dazu erforderlichen Komplikationen in der Schaltung lohnen sich aber normalerweise nicht. Vorzugsweise wird die Bremsenergie als Wärme aus der Spule 50 zerstreut. Der Strom des Stromstosses fliesst in der gleichen Richtung wie der vom Magnetfeld erzeugte Wirbelstrom.

Die allgemeine Anordnung der Ausführung nach Fig. 6 entspricht weitgehend derjenigen der Ausführung nach Fig. 1. Der Motor ist mit einem Überwachungsgerät (Inkremental- bzw. Absolutgeber) versehen, das die momentane Winkelstellung des Schwenkarms 7 angibt. Das Gerät liefert vorzugsweise ein Digitalsignal, das direkt von einer Computersteuerung verarbeitet werden kann, wobei die Verwendung eines Analog/Digital-Umsetzers nicht ausgeschlossen ist. Die Steuerung umfasst vorzugsweise einen Mikrocomputer und ein Eingabegerät zum Eingeben von Spulparametern zur Verwendung in Kombination mit dem im Computer gespeicherten Programm.

Der Changierhub (B, Fig. 8) des Schwenkarms 7 kann nun in "Abschnitte" A1 bis A10 aufgeteilt werden, wobei für jeden Abschnitt vorgegebene Parameter in den Computer eingegeben werden müssen. Solche Parameter sind z.B. die Momentangeschwindigkeit und die Momentanbeschleunigung des Schwenkarms 40. Fig. 8 zeigt schematisch solche Abschnitte, wobei aus der Figur ersichtlich ist, dass die Anzahl Abschnitte in den Umkehrzonen relativ hoch und die Anzahl in der Mitte des Hubs relativ niedrig ist. Eine Abschnittgrenze kommt dementsprechend vor, wo eine Änderung der Parameter nötig ist. Das Überwachungsgerät wird somit zusammen mit der Steuerung sowohl zum Umschalten der Schalter 54 wie auch zum Anpassen der Bewegungscharakteristik in Abhängigkeit von der Winkelstellung des Schwenkarms 7 verwendet.

Fig. 8 zeigt z.B. den Punkt P, wo beim Bewegen des Fadenführers nach links der Motor vom Antreiben auf Bremsen umgeschaltet wird, weil der Schwenkarm 7 sich einer Umkehrstelle annähert. Ungefähr zum gleichen Zeitpunkt dringt die Spule 50 in das Feld des entsprechenden Magnets 49 ein. Der Schalter 54 ist schon früher auf Kurzschluss umgeschaltet-worden, da der Zustand des Schattkreises in der Hubmitte keine Rolle spielt. Es fliesst daher sofort ein Wirbelstrom in die Spule 50, was dem Motor beim. Bremsen des Schwenkarms 7 Hilfe leistet. Die Bremswirkung des Motors wird in den Abschnitten A4 bis A1 schrittweise geändert.

Wenn das Auswerten des vom Positionssensor 10 (Fig.1) gelieferten Signals andeutet, dass die programmierte Umkehrstelle erreicht worden ist, wird die Motordrehrichtung reversiert und der Schalter umgeworfen, um einen Stromstoss in der Spule 50 zu erzeugen. Die Abschnitte A1 bis A4 gelten nun im umgekehrten Sinne zur Bremsphase, so dass der Schwenkarm gesteuert wieder auf die für den Mittenbereich A5, A6 vorgesehene Geschwindigkeit beschleunigt wird. Es ist eine relativ einfache Bewegungscharakteristik zur Darstellung des Prinzips verwendet worden. Es kann ein komplizierterer Verlauf vorgesehen werden, wie z.B. in Fig. 8 mit gestrichelten Linien für einen grösseren Changierhub B1 angedeutet worden ist.

Es ist nicht möglich, aber auch nicht notwendig, das Eindringen der Spule 50 in das Magnetfeld eines Joches 47, 49 mit dem Einleiten der Bremspause des Motors exakt zu koordinieren, da die Anordnung zur Realisierung von einer flexiblen (programmierbaren) Changierung konzipiert ist.

Die Bremsphase des Motors kann nach dem Eindringen in das Magnetfeld oder vor einem solchen Eindringen eingeleitet werden. Wichtig ist, dass die momentane Position des Schwenkarmes 7 stets von der Steuerung (Motor-Kombination anhand der Informationen vom Gerät 16) bestimmt wird, gleichgültig welche Wechselwirkung in einem bestimmten Fall zwischen dem Magnetfeld und dem Schwenkarm erzeugt wird. Die Endbereiche, die mit Permanentmagneten versehen sind, müssen gross genug sein, um die erforderliche Flexibilität bezüglich Changierhub und anderen Positionierungsanforderungen (Fadenfangen) zu ermöglichen.

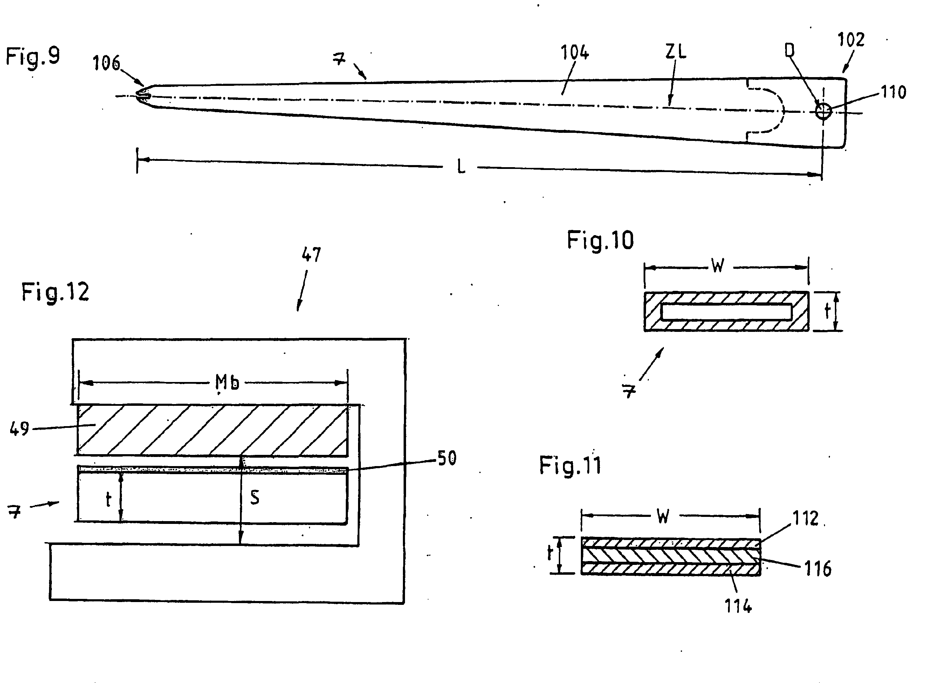

Fig. 9 zeigt nun schematisch einen Schwenkarm 7 zur Verwendung in den Ausführungen gemäss den anderen Figuren. Der Schwenkarm 7 umfasst eine Befestigungspartie 102, einen Mittelteil 104 und einen Fadenführer 106 am freien Ende. Ausgehend von der Drehachse D weist der Schwenkarm 7 eine Länge L bis zum freien Ende des Fadenführers 106 aus. Aus Fig. 5 wird ersichtlich, dass bei einem vorgegebenen Drehwinkel γ diese Länge für die Hubbreite B massgebend ist. Wenn z.B. die Länge des Schwenkarms in Fig. 5 verkürzt wäre, würden die Umkehrstellen z.B. bei U3 bzw. U4 liegen und eine entsprechend kürzere Hubbreite (nicht speziell angedeutet) ergeben. Im Prinzip könnte ein Schwenkarm einer bestimmten Changiereinheit durch einen kürzeren (oder längeren) Schwenkarm ersetzt werden, um die Hubbreite an die Anforderungen anzupassen. Normalerweise wird es aber bevorzugt sein, die Schwenkarmlänge einer bestimmten Changiereinheit unverändert beizubehalten und die Flexibilität der Programmierung für Hubänderungen auszunutzen. Dabei können verschiedene Changiereinheiten (z.B. für Spuler mit verschiedener Anzahl Fäden) verschiedene Schwenkarmlängen aufweisen. Im Prinzip ist es auch möglich, die maximalen Drehwinkel verschiedener Changiereinheiten individuell zu programmieren (und die Geometrie der Elemente entsprechend anzupassen). Vorzugsweise ist aber eine vorgegebene Programmierung (Geometrie) - oder zumindest nur wenige Variante - vorgesehen.

Vorzugsweise beträgt die Länge L zwischen 10 bis 50 cm und der Drehwinket γ zwischen 40° und 100°, vorzugsweise 45°-90°.

Fig. 10 zeigt einen möglichen Querschnitt des Schwenkarms 7 an einer beliebigen Stelle im Mittelteil 104. In dieser Variante ist der Schwenkarm als Hohlkörper mit einer Breite W (an der erwähnten Stelle) und einer "Tiefe" t gebildet. Die Tiefe t ist vorzugsweise über die Länge des Schwenkarms 7 konstant. Aus Fig. 10 ist klar, dass die Weite W erheblich grösser als die Tiefe t ist und dies gilt auch über die ganze Länge des Schwenkarms 100. Der Hohlkörper sollte aus einem steifen aber leichten Material gebildet werden, vorzugsweise aus faserverstärktem Kunststoff. Die Fasern weisen vorzugsweise einen hohen E-Modul auf (z.B. Kohlenfasern, Borfasern oder Aramidfasern).

In der Befestigungspartie 102 weist der Schwenkarm eine Verstärkung, z.B. aus Metall, auf. Die Verstärkung hat in diesem Beispiel einen U-förmigen Vorsatz (nicht speziell angedeutet), die sich als Einschub in den Hohlkörper 104 erstreckt und darin mit dem Hohlkörper (z.B. mittels Klebstoff) verbunden wird. Der Metallteil' ist mit einer Aufnahme 110 für die Welle 9 (Fig. 6) des Antriebsmotors versehen.
Die U-Form des Vorsatzes ist nicht wesentlich, die Verbindung zwischen der Partie 102 und dem Hohlkörper 104 sollte aber für die sichere Übertragung der Antriebskräfte (Drehmomente) auf den Hohlkörper sorgen und zwar zuverlässig über die Lebensdauer des Hohlkörpers 104.

Der Fadenführer 106 ist vorzugsweise auch als separater Teil gebildet und mit dem Hohlkörper verbunden, wobei ein mit einem Schlitz versehener Teil des Fadenführers frei bleibt. Dieser Teil kann z.B. aus Keramik gebildet werden.

Fig. 9 zeigt deutlich, dass sich der Querschnitt des Schwenkarms 7 über die Länge L ändert und zwar vorzugsweise als eine Funktion des Abstandes von der Drehachse D aus gemessen. Die Figur 9 zeigt einen Schwenkarm mit einer linearen Beziehung zwischen dem Schwenkarmquerschnitt und diesem Abstand, wobei eine quadratische Beziehung eigentlich bevorzugt wird. Da die Tiefe t vorzugsweise konstant ist, äussert sich die Querschnittsänderung in einer Änderung der Breite W.

Das Hohlprofil 104 (Fig. 10) in der Form eines Rechteckprofils kann z.B. als Wickelkörper gebildet werden. Ein Wickelverfahren (für einen grösseren Körper) ist schematisch in EP-A-894876 gezeigt - es kann zur Bildung des Profils 104 angepasst werden. Das Hohlprofil 104 könnte aber als Alternative aus z.B. zwei Schalenteilen gebildet werden, die miteinander verbunden werden (z. B. mittels Klebstoff), um einen zusammengesetzten Hohlkörper zu bilden. Jedes Schalenteil könnte z. B. als ein Trog geringerer Tiefe gebildet werden, wobei die Seitenwände dieser Schalenteile miteinander verbunden werden, um den Hohlkörper zu bilden.

Fig. 11 zeigt einen modifizierten Querschnitt, wobei die Dimensionen W und t gegenüber Fig. 10 unverändert sind. Der Schwenkarm 7umfasst in dieser Variante eine erste Platte 112, eine zweite Platte 114 und eine dazwischenliegende Füllschicht 116, die mit den Platten z.B. mittels Klebstoff verbunden ist. Die Endteite 102 und 106 (fig. 9) können den schon beschriebenen Teilen gleich sein.

Fig. 12 zeigt zu einem grösseren Massstab das Joch 47 aus Fig. 6 mit einem Schwenkarm 7nach Fig. 9 in seiner Umkehrstelle. Die Spaltbreite S innerhalb des Jochs 47 sollte gross genug sein, um die freie Bewegung des Schwenkarmes in diese Stelle zu gewährleisten, aber nicht wesentlich grösser. Dabei muss berücksichtigt werden, dass der in den Jochspalt eindringende Teil des Schwenkarmes die Spule 50 trägt.

Die Spule 50 ist daher vorzugsweise als sogenannte Planarspule gebildet. Die Leitungen können z.B. aus Kupfer gebildet und beispielsweise mittels Siliziumoxid voneinander isoliert werden. Ein solches Material ermöglicht eine sehr hohe Stromdichte (z.B. ca. 180 A/mm²), zumindest für eine kurze Zeitperiode, da Siliziumoxid sowohl ein guter Wärmeleiter wie auch ein guter Isolator ist. Die Leiterbahnen einer solchen Planarspule weisen eine geringe Querschnittsfläche auf, was eine niedrige Masse der Spule und eine enge Spaltbreite S ermöglicht.

Es sollte ein möglichst hohes magnetisches Feld im Luftspalt 7 jedes Jochs 47,48 erzeugt werden. Dazu können Selten-Erd-Magnete 49 verwendet werden, wobei das Joch 47 bzw. 48 vorzugsweise einen beinahe geschlossenen Feldlinienverlauf gewährleistet. Dazu sollte die Luftspaltbreite S möglichst klein-gehalten werden. Die Spaltbreite liegt z.B. im Bereich 0,5 bis 2 mm, vorzugsweise 1 bis 1,5 mm. Die Breite Mb (Figur 12) jedes Magneten beträgt beispielsweise 20 bis 50 mm, vorzugsweise 25 bis 35 mm. Seine Länge beträgt beispielsweise 30 bis 70 mm, vorzugsweise 45 bis 55 mm. Die Feldstärke im Luftspalt S beträgt beispielsweise 0,7 bis 1,3 Tesla, vorzugsweise 1 Tesla.

Die bisherige Beschreibung bezieht sich auf Umkehrstellen für den Schwenkarm bzw. den Schwenkarm, weil diese Stelle für die eigentliche Funktion von grosser Bedeutung sind. Die Steuerung bezieht sich aber nicht direkt auf die Momentanposition des Schwenkarmes, sondern auf diejenige der Motorwelle (z.B. Welle 44, Fig. 6), die als Element einer Halterung für den Schwenkarm dient. Die Steuerung wird daher anhand von Umkehrpunkten für diese Halterung (für die Welle) programmiert, die sich dann in den schon beschriebenen Umkehrstellen für den Schwenkarm äussem.

Die momentane Winkelstellung der Welle (Halterung) kann von einem Drehgeber angezeigt werden. Dieser Drehgeber kann ein Inkrementalgeber oder ein Absolutdrehgeber sein. Im Falle eines Inkrementalgebers muss das System beim Aufstarten an einen Referenzpunkt gebracht werden, wovon der Inkrementalgeber Positionsänderungen nachher "zählt". Allenfalls muss gelegentlich an diese Referenz zurückgefahren werden, um den Systemzustand zu kontrollieren und gegebenenfalls zu korrigieren. Mit einem solchen Gerät kann eine Fadenablagegenauigkeit von z.B. +/-0,25 mm erzielt werden. Mit einem Absolutwertgeber kann auf diese "Kalibrierung" verzichtet werden.

Es können verschiedene (z.B. berührungslose) Sensoren zum Referenzieren des Drehgebers verwendet werden. Beispiele sind optische, pneumatische, elektrische und induktive (magnetische) Sensoren: Ein vom Sensor geliefertes Signal, welches die "Anwesenheit" des Schwenkarmes in seiner Nähe zeigt, kann an die Steuerung geleitet und da ausgewertet werden, um eine Referenz für das Positionierungssystem zu geben. In einer Alternative kann der Schwenkarm in Berührung mit einem mechanischen Anschlag gebracht werden, wobei das entsprechende Ausgangssignal des Encoders ausgewertet werden kann, um eine Referenz für die Positionierung zu geben. Dieser Schritt soll als spezieller Referenzierungsschritt ausgeführt werden, wobei der Motor ein niedrigeres Drehmoment erzeugt, um eine beschädigungsfreie Berührung zwischen dem Schwenkarm und dem Anschlag zustande zu bringen.

Der Referenzsensor bzw. der Anschlag kann sich ausserhalb des maximalen Hubbereiches befinden, weil der Motor in der Lage ist, den Schwenkarm ausserhalb dieses Bereiches zu bewegen z.B. für den genannten Referenzierungsschritt. Der Referenzsensor bzw. der Anschlag könnte sich aber innerhalb des Hubbereiches befinden. Im letzteren Fall muss der Anschlag aus dem Bewegungspfad des Schwenkarmes entfernt werden, bevor die eigentliche Changierbewegung erfolgt. Dazu kann der Anschlag z.B. rechtwinklig oder zumindest schräg zur Changierebene zwischen einer Bereitschaftsstellung ausserhalb der Changierebene und einer Arbeitsstellung in der Changierebene bewegt werden, beispielsweise mittels einer Zylinder-Kolben-Einheit.

Die Programmierung der Steuerung besteht aus einem "fest vorgegebenen" Teil, der vom Endbenutzer nicht beeinflusst werden kann (oder soll) und einem vom Benutzer angeforderten Teil, der vorzugsweise aus gewissen Spulparameter besteht. Eine nominale Hubbreite gehört vorzugsweise zum fest vorgegebenen Programmteil, wobei die effektive Hubbreite (die Verlegelänge) für einen bestimmten Fadenhub von der Steuerung anhand der vom Benutzer eingegebenen Spulparameter errechnet wird. Folgende Spulparameter können beispielsweise eingegeben werden:

### Kreuzungswinkel

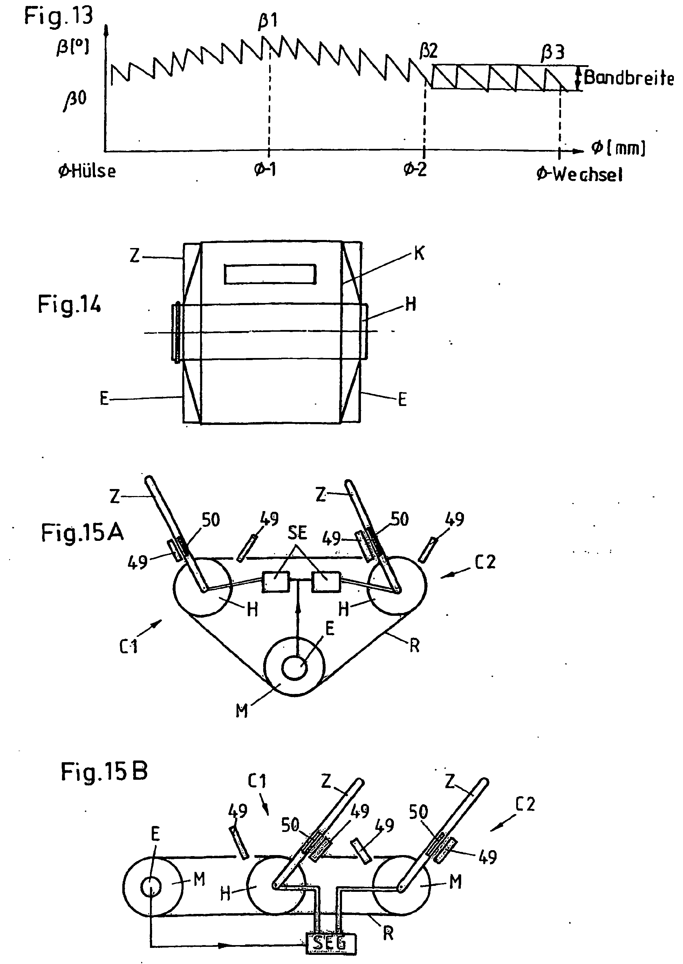

Der Kreuzungswinkel definiert die auf die aktuelle Spulgeschwindigkeit bezogene (mittlere) Changiergeschwindigkeit. Fig. 13 zeigt schematisch die Veränderung des Kreuzungswinkelverlaufes während der Spulreise, wobei die Darstellung der Figur 8 aus EP-B-629174 entspricht.

### Bandbreite

Die Bandbreite definiert die Abweichung, um die der vorgegebene Kreuzungswinkel variieren darf (Fig. 13), falls eine Stufenpräzisionswicklung gewünscht wird (vgl. Fig. 8, EP-B-629 174). Die Abweichung vom mittleren Kreuzungswinkel des Bandes beträgt z.B. 0 bis 3°..

### Bruchtabelle

Die Bruchtabelle enthält die gebrochenen Teile der zulässigen Windungsverhältnisse (vgl. z.B. US-B-5,605,295). Ausgewählte Windungsverhältnisse können z. B. als Rezepte in einem Spuler der Steuerung abgelegt werden.

### Hubatmung

Mit der Hubatmung wird eine periodische Änderung der Verlegelänge definiert. Auch in diesem Fall können Rezepte abgelegt werden.

### Hubverlauf

Der Hubverlauf definiert die Verlegelänge Ober die Spulreise. Es werden z.B. vier Stützpunkten je eine Verlegelänge zugeordnet.
Einheit: % (der normalen Hubbreite), Bereich: 80-120 %.
In diesem Bereich wird ein nominaler Hub (= 100 %) in die Software eingegeben. Die Änderung kann dann z. B. nur zwischen 80-120 % vollzogen werden. Ist z.B. ein nominaler Hub = 250 mm definiert, kann zwischen 200-300 mm changiert werden. Die Hubbreite kann dann konstant über die Spulenreise gewählt werden, oder ein (z. B. durchmesserabhängiger) Verlauf eingegeben werden (ähnlich dem Kreuzungswinkelverlauf). Dem überlagert kann sich die Hubbreite via Hubatmung ändern (ähnlich Stufenpräzisionswicklung oder Wobbelung über den Kreuzungswinkelverlauf).

Der Verlauf eines Betriebsparameters (z.B. Kreuzungswinkel, bzw. Hubverlauf) könnte als eine Funktion der Zeit oder eines anderen mit dem Spulenaufbau korrelierenden Parameter definiert werden. Die horizontale Achse in Fig. 13 müsste entsprechend angepasst werden. Ein variierbarer Verlauf könnte insbesondere als eine Funktion der Anzahl Hübe des Changiergerätes definiert werden, wobei die Anzahl Hübe vom Beginn der Spulreise oder von einem vorgehenden Stützpunkt definiert werden könnte.

In der Steuerung können verschiedene "Changierrezepte" fest programmiert werden (fest bedeutet nicht unbedingt unveränderbar, sondern bloss vom Benutzer beim Eingeben von Spulparameter nicht beeinflussbar). Der Benutzer kann dann eines dieser Rezepte aufrufen und sie mit dem eingegebenen Spulparameter zum Bilden von bestimmten Spulen "verknüpfen".

Die Hubbreite sollte die Hülsenlänge optimal erschliessen (Packungsvolumen = max.). Falls aber aus technologischen Gründen (z.B. wegen extremer Ausbauchung) eine schmalere Packung gespult werden kann, ohne dass die Bäuche über den Hülsenrand herausragen, kann dies ein Vorteil für den Transport sein. Dazu können die Fähigkeiten der neuen Changierung ausgenutzt werden, was aus Fig. 14 ersichtlich ist. Der "Kern" K in dieser Figur stellt eine zylindrische Packung dar, die auf der Hülse H mit den bisherigen Changierungen aufgebaut werden kann. Die axiale Länge dieser Kernpackung K ist erheblich kürzer als die Länge der Hülse H, weil die zu erwartende Ausbauchung eine Erweiterung des Kerns bis an die zulässigen Grenzen bewirken wird. Mittels einer Changierung nach dieser Erfindung kann zumindest eine Packung mit bikonischen Enden E gebildet werden, weil die Hublänge während der Spulreise geändert werden kann. Dadurch kann mehr Fadenmaterial pro Hülse aufgewickelt werden, ohne den Spulenaufbau durch einen speziellen Ablagealgorithmus beeinflussen zu müssen. Durch die volle Ausnutzung der Fähigkeiten der neuen Changierung, d.h. beim gesteuerten Verlegen des Fadens innerhalb der einzelnen Changierhübe, ist es aber allenfalls möglich, eine zylindrische Packung Z mit der maximal zulässigen Axiallänge zu bilden.

In einem praktischen Spuler (siehe z.B. US-B-5,794,868 oder US-B-5.553,686) werden normalerweise mehrere Fäden nebeneinander auf einem einzigen Spulendom zu je einer Packung gespult. Es muss für jede Packung eine Changiereinheit (mit einem Schwenkarm) nach der Erfindung vorgesehen werden. Es ist aber nicht zwingend erforderlich, für jeden Schwenkarm einen eigenen Motor vorzusehen, obwohl dies offensichtlich möglich ist. Statt dessen kann für alle Changiereinheiten ein gemeinsamer Motor vorgesehen werden, wobei die Drehbewegungen der Motorwelle durch eine geeignete Übertragung (z.B. mittels eines Riemens) an die jeweiligen Changiereinheiten übertragen werden. Die Übertragung erfolgt vorzugsweise derart zuverlässig, dass auf eine Überwachung pro Einheit verzichtet werden kann d.h. es ist auch nur ein Servo-Regler für den zentralen Antrieb vorgesehen. Wenn der Übertragungsweg zu lang wird kann der Antrieb "gruppenweise" erfolgen, d.h. es kann für eine Gruppe (zwei oder mehr) benachbarter Einheiten ein gemeinsamer Antrieb vorgesehen werden.

Die Figuren 15A und 15B zeigen je eine Variante einer Mehrfachchangierung mit Gruppenantrieb. In der Fig. 15A sind die Changiereinheiten paarweise angeordnet, wobei nur die Changiereinheiten C1 bzw. C2 eines Paares scheinatisch abgebildet sind. Jedem Paar wird ein jeweiliger Antriebsmotor M zugeordnet, der über einen Riemenantrieb R mit drehbar gelagerten Halterungen mit beiden Changiereinheiten des Paares verbunden ist. Die Changiereinheiten C1, C2 und der Motor M sind gemäss einer "V-Geometrie" angeordnet. Die Fig. 15B zeigt schematisch ein ähnliches Antriebskonzept mit einer "Linearanordnung" des Motors und den Changiereinheiten der Gruppe. In beiden Varianten kann eine Gruppe mehr als zwei Changiereinheiten umfassen und es können pro Spuler mehrere solcher Gruppen vorgesehen werden.

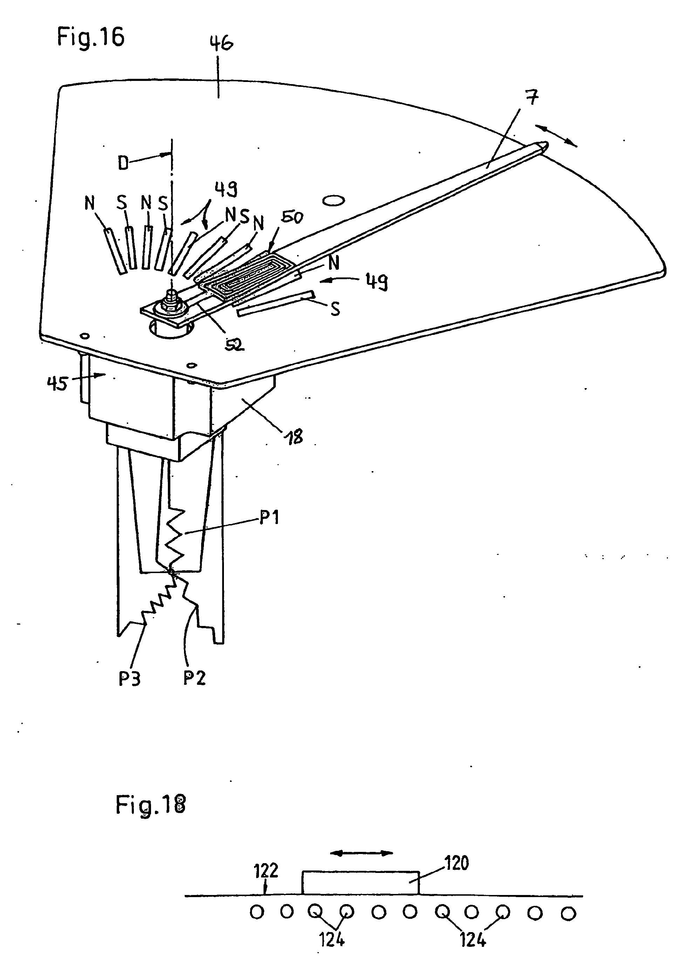

Bei einem Gruppenantrieb stellt sich die Frage, wo eine allfällige Umkehrunterstützung unterzubringen ist. In beiden abgebildeten Varianten ist jedem Schwenkarm Z ein jeweiliges Magnetenpaar 49 (vgl. Fig. 6) zugeordnet. Jeder Schwenkarm Z weist auch eine Planarspule 50 auf. Die Spulen 50 in Fig. 15A sind mit je einer Schalt-/ Energiezufuhreinheit SE verbunden, während die Spulen 50 in Fig. 15B mit einer gemeinsamen Schalt-/Energie-zufuhreinheit SEG verbunden sind. In beiden Fällen weist der Antrieb einen Servoregler auf, der einem Encoder E umfasst. Die Einheiten SE in Fig. 15A und die Einheit SEG in Fig. 16B werden anhand der Signale vom entsprechenden Encoder E geschaltet.

Im Prinzip besteht die Möglichkeit eine gemeinsame Umkehrunterstützung für alle Changiereinheiten einer Gruppe dem Antriebsmotor der Gruppe zuzuordnen, z.B. anhand von Zusatzwicklungen im Motor. Dies erfordert aber eine spezielle Motorenkonstruktion, was sich meistens nicht lohnen wird.

Die Fig. 16 zeigt eine Lagereinheit 45 für einen Schwenkarm 7 mit einer Drehachse D. Die Lagereinheit umfasst in einem Gehäuse 100 einen Encoder 18 (nicht sichtbar), weiche die Winkelstellung der Welle und damit des Schwenkarms angibt. Auf dem Gehäuse 45 ist eine Platte 46 montiert, die als Träger für schematisch angedeutete, längliche Permanentmagneten 49 dient, die gemeinsam eine segmentförmige Bahn um die Drehachse D bilden bzw. einer solchen Bahn entlang fächerförmig gleichmässig verteilt sind. Die Magnete 49 weisen an ihren nach oben gerichteten Oberflächen abwechselnd Nord- bzw. Südpolarität auf, was in der Figur 6 mit "N" bzw. "S" angedeutet wird.

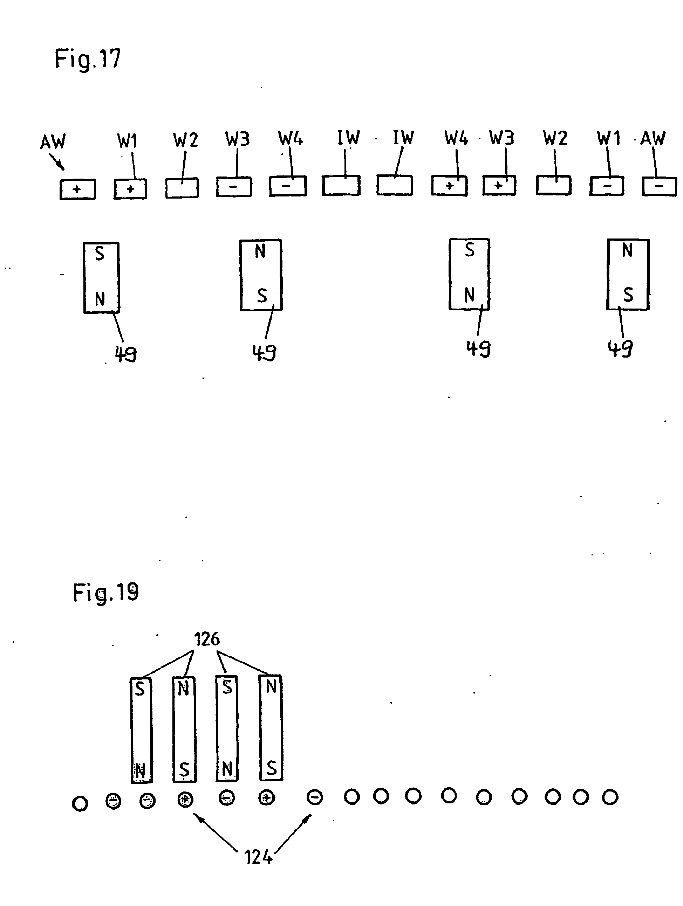

Der Schwenkarm 7 trägt mehrere (z.B. drei) "elektrische Windungen" 50 (in der Form von Leiterbahnen), die in Fig. 16 nur schematisch abgebildet sind. Die Leiterbahnen sind über Leiter 52 bis zur Drehachse geführt, wo sie mit anderen, stationären Schaltungselemente (nicht gezeigt) verbunden werden können. In diesem Fall bilden die Windungen 50 keine "Spulen", sondern es wird jede Windung für sich separat mit dem jeweiligen zusätzlichen Schaltelemente verbunden, so dass die Windungen individuell mit Strom beaufschlagt werden können, wie nachfolgend anhand der Figur 17 erklärt wird.

Das Prinzip eines sogenannten Linearmotors ist in der Zeitschrift "Antriebstechnik", 29 (1990) Nr. 9, Seite 38 und 42 erklärt worden. Die Figur 17 entspricht der Prinzipdarstellung im genannten Artikel. Nach dieser Darstellung trägt der Schwenkarm 7 sechs Leiterbahnen, die eine äussere Windung AW, eine innere Windung IW und vier dazwischenliegende Windungen W1, W2, W3 und W4 bilden. Die äussere Windung AW ist breit genug, um vier benachbarte Magneten 49 "abzudecken". Diese Magnete können für die nachfolgende Beschreibung als zwei Magnetpaare 108A, 108B bzw. 108C, 108D betrachtet werden.

Mittels einer geeigneten Steuerung kann nun die Stromzufuhr an diesen Windungen in Abhängigkeit von der momentanen Position des Schwenkarms 7 geschaltet werden. Die Figur 17 stellt einen "Schnappschuss" des Systemzustandes zu einem Zeitpunkt dar, als die beiden äusseren Windungen AW bzw. W1 Strom in einer ersten Richtung führen, die schematisch mit "+" bzw. "-" angedeutet ist. Die beiden Windungen W3 und W4 führen zum gleichen Zeitpunkt Strom in der entgegengesetzten Richtung, wie ebenfalls mit +/- angedeutet ist. Die Windungen IW und W2 führen zu diesem Zeitpunkt keinen Strom.

Die Windungen bilden effektiv drei "Phasen" eines Elektromotors, welche eine Kraft auf den Schwenkarm ausübt und ihn nach links oder nach rechts in Figur 17 treibt. Dies ist schematisch in Fig. 16 angedeutet worden, wo die Leiterbahnen 52 "unterhalb" des Gehäuses 45 mit je einer von drei Phasenwicklungen P1, P2 und P3 einer Energiequelle verbunden sind. Als sich der Schwenkarm bewegt, kann die Stromzufuhr geschaltet werden, um die Wechselwirkung des sich bewegenden elektrischen Feldes mit der sich der Bahn entlang variierenden Feldstärke des Magnetfeldes zu optimieren. "Optimieren" heisst hier nicht unbedingt "maximieren". Wie für die Varianten nach den Figuren 1 bis 4 soll der Motor lageabhängig gesteuert werden, um die erforderliche Changierbewegung an der entsprechenden Stelle zu erzeugen. Dies hängt wiederum von der Programmierung der Steuerung ab.

Figur 16 und 17 stellen die bevorzugte Anordnung dar, weil das Drehlager eine optimale, reibungsarme Halterung bildet. Fig. 18 und Fig. 19 zeigen eine Alternative mit einem linear bewegbaren Schlitten 120. Der Schlitten 120 läuft auf einer Gleitbahn 122, wobei stationäre Windungen 124 unterhalb der Gleitbahn angeordnet sind. Die Magnete 126 (Fig. 19) sind auf dem Schlitten angebracht. Die Windungen 124 können eine nach der anderen mit Strom beaufschlagt werden, um den Schlitten in die gewünschte Richtung zu treiben, bzw. zu bremsen. Die Reibungsverluste werden sich als zu hoch erweisen, wenn dieser Schlitten 120 stets in Berührung mit der Gleitbahn 122 laufen muss. Statt dessen kann einen Luftlager vorgesehen werden (wie im vorerwähnten Artikel aus "Antriebstechnik" vorgeschlagen wurde) oder die Anordnung kann als "Schwebebahn" realisiert werden, wobei das Magnetfeld sowohl die den Schlitten bewegenden, wie auch die den Schlitten in der Schwebe haltenden Kräfte erzeugt.

Die dargestellten Ausführungen weisen Permanentmagnete auf. Es können aber Elektromagnete verwendet werden, wobei die Strömungen in den Feldwindungen der Elektromagnete ebenfalls in Abhängigkeit von der momentanen Lage des Schwenkarms bzw. des Schlittens geschaltet werden können.

Die Ausführungen können gemäss den Figuren 16 und 18 mit Umkehrhilfen, ähnlich den im Zusammenhang mit Fig. 6 erklärten Elementen, versehen werden. Die Endmagnete der Bahn können somit mit Jochen, ähnlich der Joche 47, 48 (Fig. 6), versehen werden und die Windungen können entsprechend kurzgeschlossen/mit einer Beschleunigungshilfe verbunden werden.

Der Begriff "Fadenführer" umfasst in den Ansprüchen auch einen Teil, der das Faden berührende Element trägt und sich mit ihm bewegt (bewegen muss). Der Schwenkarm in Fig. 16 und der Schlitten in Fig. 18 fallen daher unter den hier verwendeten Begriff "Fadenführer".

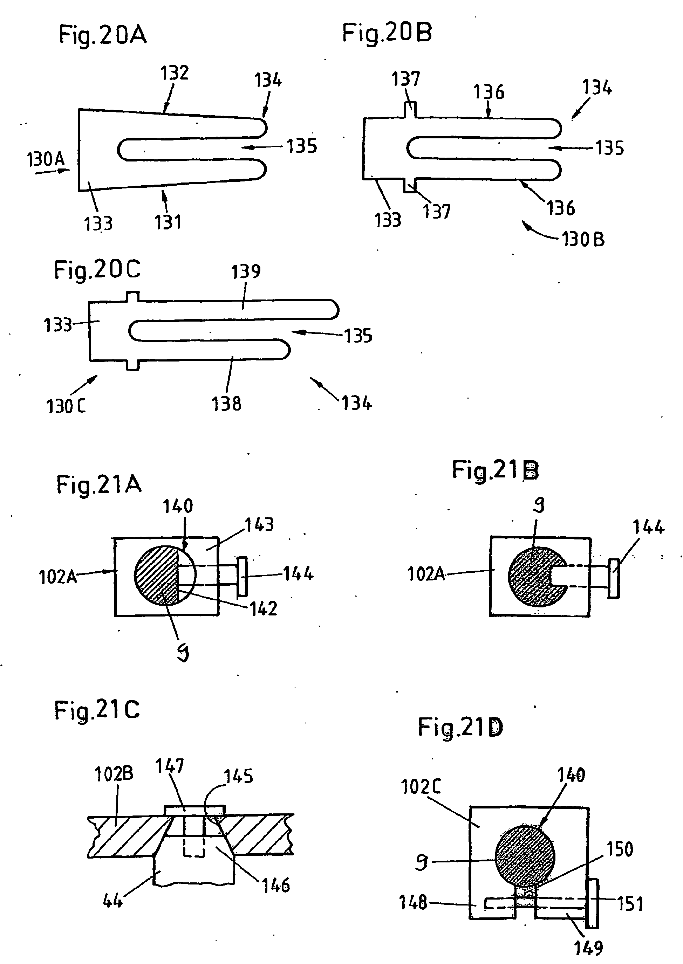

Fig. 20 befasst sich mit geeigneten Ausführungen des Fadenführers. Die bevorzugte Konstruktion umfasst eine formschlüssige Verbindung zwischen dem Fadenführer 106 und dem Schwenkarm 7. Zwei mögliche Varianten sind in den Figuren 20A und 20B gezeigt. Die erste Variante (Fig. 20A) umfasst einen länglichen Körper 130A mit sich in der Längsrichtung verjüngenden Seitenflächen 131, 132, die eine relativ breite Fusspartie 133 und einen engen Kopf 134 ergeben. Die Fusspartie 133 wird vom Schwenkarm (nicht gezeigt) aufgenommen, so dass die Kopfpartie 134 freisteht (vgl. Fig. 6). Die Kopfpartie 134 hat einen Längsschlitz 135, der am freien Ende des Fadenführers mündet. Die Variante nach Fig. 20B hat auch eine Fusspartie 133 und einen Kopf 134 mit einem Längsschlitz 135. Der Körper 130B hat aber parallel verlaufende Seitenflächen 136, die im Bereich vom inneren Ende des Schlitzes 135 je einen Vorsprung 137 aufweisen. Die Kopfbreite ist daher in diesem Fall der Fussbreite gleich, wobei der Körper 130B auch mit sich verjüngenden Seitenflächen versehen werden könnte. Die Fusspartie 133 des Körpers 130A bzw. 130B wird derart im Schwenkarm eingebaut bzw. eingebettet, dass die Vorsprünge 137 und/oder die sich verjüngenden Seitenflächen 131, 132 mit dem Schwenkarm die gewünschte formschlüssige Verbindung bilden.

Fig. 20C zeigt ebenfalls einen Fadenführer in der Form eines länglichen Körpers 130C mit einer Fusspartie 133 (ähnlich der Fusspartie der Variante nach Fig. 20B), einen Kopf 134 und einen Längsschlitz 135. Die durch den Schlitz 135 gebildeten Schenkel 138, 139 sind aber in diesem Fall ungleich lang, was das Einfädeln des Fadenführers beim Bewegen des Schwenkarmes in einer seiner Drehrichtungen begünstigt.

Der Fadenführer kann aus einem geeigneten Material gebildet sein, z.B. Al₂O₃ oder SSiC. Es ist aber auch möglich, den Körper 130 grundsätzlich aus einem anderen (*??*)teuren Material zu bilden und mit einer geeigneten Beschichtung zu versehen. Das Beschichtungsmaterial muss zwei Anforderungen erfüllen, nämlich (1.) eine Oberfläche bilden die nur eine geringe Reibung zwischen dem Faden und dem Fadenführer verursacht, und (2) einen hohen Verschleisswiderstand aufweisen, da der Faden beim Hochgeschwindigkeitsspulen (z.B. > 4000 m/min., vorzugsweise > 6000 m/min beispielsweise bis ca. 10,000 m/min.) eine hoch abrasive Wirkung erzeugt. Das Beschichtungsmaterial, oder das Material des Körpers, falls auf eine Beschichtung verzichtet wird, muss daher hart und zäh sein. Geeignete Beschichtungsverfahren sind z.B. das galvanische Beschichten oder das Plasmabeschichten.

Der Fadenführer sollte möglichst massearm gebildet werden. Seine Länge wird daher möglichst kurz gehalten, wobei eine Verkürzung unterhalb einer gewissen Grenze durch die erforderliche Funktion verhindert wird. Der Körper 130 weist daher vorzugsweise eine geringe Dicke (vgl. der Dimension "t" in den Figuren 10 und 11) auf, d.h. rechtwinklig zur Ebene der Darstellung in den Figuren 20A bis 20C. Die bevorzugte Dicke des Körpers 130 liegt daher im Bereich 0,2 bis 1,5 mm, vorzugsweise ca. 0,6 mm.

Um die Reibung zwischen dem Faden und dem Körper 130 auf ein Minimum zu halten, kann der Körper 130 im Bereich des Schlitzes 135 Rundungen aufweisen oder lediglich über gebrochene Kanten verfügen.

Um den Fadenführer mit dem Schwenkarm sicher zu verbinden, kann ein zusätzliches Verbindungsmittel verwendet werden, z.B. ein Klebstoff oder eine Schraube. Die Verbindung kann während des Herstellens des Schwenkarmes erzeugt werden d.h. der Fadenführer kann beim Zusammenstellen bzw. Bilden des Schwenkarmes darin integriert werden, oder der Fadenführer kann erst nachträglich mit dem Schwenkarm verbunden werden, d.h. nachdem der Schwenkarm selbst fertiggestellt worden ist.

Der Fadenführer kann derart in den Schwenkarm eingebettet sein, dass er abgestützt ist. Damit wird vermieden, dass das dünne Keramikplättchen bricht. Die grössere Klebe- bzw. Verbindungsfläche sorgt zudem für eine gute Kräfteverteilung. Es ist nicht erfindungswesentlich, den Fadenführer separat zu bilden und am Schwerikarm zu befestigen. Ein Fadenführerschlitz könnte direkt im Schwenkarm selbst gebildet werden. Der erforderliche Schutz gegen Verschleiss könnte durch eine geeignete Beschichtung gewährleistet werden.

Am anderen Ende des Schwenkarmes vom Fadenführer muss eine Verbindung mit der Antriebswelle des Motors erstellt werden. Diese Verbindung ist wichtig, weil die Fähigkeit des Motors, die Position des Fadenführers genau zu bestimmen, von der Genauigkeit der Übertragung der Bewegungen der Motorwelle auf dem Schwenkarm abhängt. Auch in diesem Fall kommt vorzugsweise eine formschlüssige Verbindung zustande. Fig. 21A zeigt einen Endteil 102A (vgl. Fig. 9), das eine durchgehende Bohrung 140 aufweist, um das freie Ende der Motorwelle 9 (vgl. Fig. 6) aufzunehmen. Der Endteil der Welle 9 ist in diesem Fall einseitig angeschliffen, um eine Fläche 142 zu bilden. Eine Seitenwand 143 des Teils 102A hat eine Gewindebohrung (nicht speziell angedeutet) zum Aufnehmen einer Befestigungsschraube 144, wobei das innere Ende der Schraube fest gegen die Fläche 142 drückt bzw. in ein Loch (nicht gezeigt) im Wellenende hineinragt.

Fig. 21B zeigt eine ähnliche Variante, wobei auf das einseitige Schleifen vom Wellenende verzichtet wird. Die Schraube 144 arbeitet mit einer Gewindebohrung (Sackloch) oder Fedemut im Wellenende zusammen. Fig. 21C zeigt ein Endteil 102B im Querschnitt. Dieser Teil ist mit einem sich verjüngenden Loch 145 versehen, um ein Kegelstumpf 146 am freien Ende der Welle 9 aufzunehmen. Eine Klemmschraube 147 klemmt den Endteil 142 auf dem Wellenende fest. Fig. 21D zeigt einen Endteil 102C mit einem bis zur Bohrung 140 durchgehenden Schlitz 150 zur Bildung zweier elastisch deformierbaren Schenkel 148 bzw. 149. Eine Zugschraube 151 kann vorgesehen werden, um die Schenkel gegeneinander zu drücken und dabei eine kraftschlüssige Verbindung mit dem in der Bohrung 140 aufgenommenen Wellenende zu erzeugen. Der Kraftschluss wird gegebenenfalls über die Dauer nicht ausreichen. Er kann daher durch einen zusätzlichen Formschluss ergänzt werden, z.B. durch Längsrippen am Wellenende (nicht gezeigt), die in entsprechende Nuten im Endteil 102 eingreifen.

Das Endteil 102 weist vorzugsweise eine niedrige Massenträgheit auf. Er kann daher z.B. aus einer Leichtmetalllegierung (Al-Legierung) gebildet werden. Wie im Fall des Fadenführers, kann er beim Erstellen des Trägerarmes darin integriert oder nachträglich darin eingebunden werden, z.B. mittels Klebstoff.

Wie an verschiedenen Stellen in der Beschreibung erwähnt wurde, können mit einer Changierung nach der Erfindung mittels geeigneter Programmierung viele Packungsarten realisiert werden, die bis anhin nur durch eine mehr oder weniger grosse Anpassung der Maschine selbst (Austausch der Changierung) erzielt werden konnten. Beispiele sind:
- die verschiedenen konventionellen Wicklungsarten (wilde Wicklung, Präzisionswicklung und Stufenpräzisionswicklung);
- die verschiedenen konventionellen Packungsformen (zylindrisch, konisch, bikonisch..)
- Hubänderungen, wie Hubverkürzung, Hubverlegung und "Hubatmung".

Der Begriff "Hubatmung" bezieht sich auf eine intermittierende bzw. periodische Verschiebung einer oder beider Umkehrpunkte eines Changierhubes. Das Prinzip ist dem Fachmann gut bekannt und es ist auch oft realisiert worden, allerdings normalerweise mittels erheblicher mechanischer Komplexitäten - siehe z.B. US 5,275,843; US 4,555,069, EP 27173 und EP 12 937. Die Fähigkeit der nun vorliegenden Changierung, der Hubcharakteristik für einzelne Lagen bzw. zumindest einzelne Schichten der Packung zu programmieren, ermöglicht nun das Realisieren einer Hubatmung auch in einem Hochgeschwindigkeitsspuler ohne einen mechanischen Eingriff in die normale Fadenführung.

Wichtig im Zusammenhang mit der Gestaltung der Maschine selbst ist ihr einfacher Aufbau, der aber auf dem optimalen Ausnutzen moderner Materialien (massenarme Konstruktion) und Regelungsprinzipien (digitale Servoregler) beruht. Dadurch wird es möglich, den Fadenführer direkt mit dem Motor zu verbinden, so dass die Bewegungen des Rotors ohne Übersetzung auf den Fadenführer übertragen werden können, wodurch die hohen dynamischen Forderungen einer Changierung für einen Hochgeschwindigkeitsspuler trotzdem erfüllt werden können. Wichtig in diesem Zusammenhang ist das Fehlen "zusätzlicher" Reibungskräfte zwischen dem Fadenführer und einer "Fadenführerführung" - das Versehen bzw. Anbringen des Fadenführers an einen Träger (Schwenkarm), der selbst keine zusätzliche Führung erfordert (d.h. die erforderliche Steifigkeit beim niedrigen Massenträgheitsmoment aufweist) ermöglicht daher eine wesentliche Verbesserung der dynamischen Fähigkeiten des Systems.

Es ist trotzdem möglich, dass die genaue Einhaltung der vorgegebenen Umkehrfunktion (ohne die Verwendung eines "überdimensionierten Motors") zu Schwierigkeiten führen wird, so dass zumindest für gewisse Anwendungen z.B. mit einem Unter- oder Überschiessen der Umkehrpunkte gerechnet werden muss. In solchen Fällen kann der Fehler gemessen werden, weil die Winkelstellung des Schwenkarmes bzw. seiner Halterung stets bekannt ist und die Motorsteuerung kann dann derart optimiert werden, dass der Fehler soweit möglich durch eine Änderung der Hubcharakteristik ausgeglichen wird. Das Unter- oder Überschiessen beim Messen des Fehlers mit anschliessender Fehlerkompensation wird dementsprechend in den Ansprüchen als "Einhalten der vorgegebenen Umkehrpunkte" betrachtet.

## Patentansprüche

1. Changieraggregat für das Verlegen eines Fadens beim Spulenaufbau mit einem über einen Arbeitsbereich bewegbaren Schwenkarm (7), der einen Fadenführer (106) aufweist und zum Bewegen des Fadenführers (106) hin und her über einen Hub (H, B) geeignet ist, **dadurch gekennzeichnet, daß** der Schwenkarm (7) mit mindestens einem Element (50) versehen ist, das mit einem felderzeugenden Mittel (49) zusammenarbeitet, um eine Art Linearmotor zu bilden, so daß eine den Schwenkarm (7) bewegende und/oder bremsende Kraft als Hilfskraft oder alleinige Kraft direkt auf dem Schwenkarm (7) erzeugt wird, wobei der Arbeitsbereich des Schwenkarmes ein Hub ist und weitere Positionen zur Stillsetzung des Schwenkarmes (7) innerhalb oder außerhalb des Hubes vorgesehen sind.

2. Changieraggregat nach Anspruch 1, **dadurch gekennzeichnet, dass** ein stationäres Mittel (49) vorgesehen ist, um eine Bahn B in der Form eines magnetischen Feldes zu erzeugen, und dass der Schwenkarm (7) mit einem krafterzeugenden Mittel (50) versehen ist, welches mit dem Feld zusammenwirken kann, um den Schwenkarm (7) der Bahn entlang über einen vorgegebenen Arbeitsbereich (U1-U2) zu bewegen oder an vorbestimmten Positionen (A1-A10) stillzusetzten.

3. Aggregat nach Anspruch 2, **dadurch gekennzeichnet, dass** das magnetische Feld durch Permanentmagnete (49) erzeugt wird.

4. Aggregat nach Anspruch 3, **dadurch gekennzeichnet, dass** die Permanentmagnete (49) nebeneinander der Bahn B entlang verteilt sind.

5. Aggregat nach einem der Ansprüche 2 bis 4, **dadurch gekennzeichnet, dass** das krafterzeugende Mittel mindestens eine elektrisch leitende Windung (124) umfasst, die vom Schwenkarm (7) getragen wird.

6. Aggregat nach Anspruch 5, **dadurch gekennzeichnet, dass** die Windung (124) mit stationären Schaltmitteln (54) verbunden ist, um die Stromzufuhr in Abhängigkeit von der Position des Schwenkarms (7) gegenüber dem Arbeitsbereich steuern zu können.

7. Aggregat nach Anspruch 5 oder 6, **dadurch gekennzeichnet, dass** mehrere Windungen (124) vorhanden sind, die individuell mit Strom beaufschlagt werden können.

8. Aggregat nach Anspruch 7, **dadurch gekennzeichnet, dass** die Windungen (124) je eine Phase eines mehrphasigen Motors (8) darstellen.

9. Aggregat nach Anspruch 1, **dadurch gekennzeichnet, dass** die Umkehrpunkte (U1, U2) des Hubes B innerhalb vorgegebener Bereiche (A1-A10) variabel gewählt werden können.

10. Aggregat nach einem der vorgenannten Ansprüche, **dadurch gekennzeichnet, dass** der Schwenkarm (7) an definierten Positionen innerhalb des Arbeitsbereiches zum Ausführen vorbestimmter Funktionen wie z.B. Starten eines Prozesses oder besonderer Prozessschritte beispielsweise Spulenwechsel und Fadenfangen, falls es als Changieraggregat (2) verwendet wird, vom Motor (8) gesteuert bewegt oder stillgesetzt wird.

11. Aggregat nach Anspruch 1, **dadurch gekennzeichnet, dass** im Arbeitsbereich Hilfsbereiche (A1-A10) für eine unterstützende positive oder negative Beschleunigung vorgesehen sind.

12. Aggregat nach Anspruch 11, **dadurch gekennzeichnet, dass** die positive oder negative Beschleunigung berührungslos, vorzugsweise elektromagnetisch, erfolgt.

13. Aggregat nach einem der vorgenannten Ansprüche, **dadurch gekennzeichnet, dass** diese Art von einem Linearmotor auf Teilbereiche des Arbeitsbereiches eingeschränkt ist, in denen eine zum Standartantrieb, wie z.B. Servomotor, Schrittmotor oder Linearmotor (8), unterstützende Beschleunigung oder Abbremsung notwendig ist.

14. Aggregat nach einem der Ansprüche 1 bis 12, **dadurch gekennzeichnet, dass** diese Art von Linearmotor sich über den gesamten Arbeitsbereich erstreckt und als alleiniges Antriebsmittel ausgebildet ist.

15. Aggregat nach. Anspruch 1, **dadurch gekennzeichnet, dass** das Mittel zum Erzeugen eines elektrischen Feldes eine Spule (50) umfasst, die über einen Schalter (54) kurzgeschlossen bzw. mit einer Energiequelle (56) verbunden werden kann.

16. Aggregat nach mindestens einem der vorangehenden Ansprüche als Changieraggregat (2) einer Spulmaschine (1) für das Changieren des Fadens entlang eines Hubes (H;B), **dadurch gekennzeichnet, dass** eine Steuerung (12) den Schwenkarm (7) und damit den Faden auch ausserhalb des Hubes (H, B) für vorgegebene Funktionen wahlweise führen kann.

17. Aggregat nach Anspruch 16, **dadurch gekennzeichnet, dass** die Steuerung den Antrieb (42) derart steuert, dass der Schwenkarm (7) zur Bildung einer Spule (3) innerhalb des Hubes nach vorgegebenem Pro-, gramm bewegt und für den Einzug und Spulenwechsel innerhalb und / oder ausserhalb des Hubs stillgesetzt werden kann.

18. Aggregat nach Anspruch 17, **dadurch gekennzeichnet, dass** der Schwenkarm (7) ausserhalb des Hubs an einer Stelle (A, Fig. 2) für das Fangen des Fadens durch ein Fangmesser oder einen Fangschlitz einer neuen Hülse (4) und an einer weiteren, sich näher an der Spule (3) befindlichen Stelle (B, Fig. 2) auf der Hülse (4) zur Bildung einer Fadenreserve, stillgesetzt werden kann.

19. Aggregat nach Anspruch 17 oder 18, **dadurch gekennzeichnet, dass** die Steuerung (12) den Fadenführer (7; 106) zur Bildung eines Endwulstes auf der fertigen Spule auch innerhalb des Hubes (H, B) stillsetzen kann.

20. Aggregat nach einem der Ansprüche 16 bis 19, **dadurch gekennzeichnet, dass** für den Schwenkarm (7) zur optimierten Gestaltung der Spule (3) ein variabler Drehwinkel und damit variable Umkehrpunkte (A, B, C, A1-A10) gemäss der Steuerung (12) gewählt werden können.

21. Aggregat nach einem der vorangehenden Ansprüche, **dadurch gekennzeichnet, dass** ein Leitlineal (6) für das Führün des changierenden Fadens vorgesehen ist und, dass das Leitlineal (6) eine für das Führen des Fadens innerhalb und ausserhalb des Hubes je eine vorgegebene Form aufweist.

22. Aggregat nach einem der vorangehenden Ansprüche, **dadurch gekennzeichnet, dass** die Steuerung (12) für das Führen des Fadens innerhalb und ausserhalb des Hubes (H, B) je ein vorgegebenes, dem Aufbau der Spule (3) dem Einzug und dem Spulenwechsel entsprechendes Steuerprogramm aufweist.

23. Changieraggregat nach Anspruch 1 **gekennzeichnet durch** eine drehbare Halterung (9) für einen Schwenkarm (7), einen Antrieb (8, 42) zum Drehen der Halterung um eine vorgegebene Drehachse (D), eine programmierbare Steuerung (12) für den Antrieb (8, 42) und ein Sensormittel (10), dessen Ausgangssignal von der Winkelstellung der Halterung abhängig ist, sowie **dadurch**, dass Positionen, wie z.B. Umkehrstellen U1 und U2 für die Drehbewegung der Halterung in der Steuerung (12) festgelegt werden können und dass anhand der festgelegten Positionen und der vom Sensormittel (10) gelieferten Positionsangaben die Steuerung in der Lage ist, den Antrieb (8, 42) derart zu steuern, dass der Schwenkarm (7) zwischen den festgelegten Positionen (U1, U2, A1, A10) bewegt oder an einer festgelegten Position (A, B, C) stillgesetzt werden kann.

## Claims

1. Traversing device for displacing and laying a thread for building up bobbins with a swivel arm (7) that can move over a working range, that features a thread guide (106) and that is capable of moving the thread guide (106) back and forth over a stroke range (H, B), **characterised in that** the swivel arm (7) is equipped with at least one element (50) that works together with a field-generating element (49) in order to form a type of linear motor so that a force that moves and/or brakes the swivel arm (7) is generated as an auxiliary force or stand-alone force directly on the swivel arm (7), where the working range of the swivel arm is a stroke range, and further positions for stopping the swivel arm (7) are provided within or outside the stroke range.

2. Traversing device according to claim 1, **characterised in that** a stationary element (49) is provided for the purpose of generating a path B in the form of a magnetic field and that the swivel arm (7) is equipped with a force-generating element (50) which can interact with the field in order to move the swivel arm (7) along the path over a defined working range (U1 - U2) or to stop the swivel arm in predefined positions (A1 - A10).

3. Device according to claim 2, **characterised in that** the magnetic field is generated by permanent magnets (49).

4. Device according to claim 3, **characterised in that** the permanent magnets (49) are distributed adjacent to each other along the path B. 4. Device according to claim 3, **characterised in that** the permanent magnets (49) are distributed adjacent to each other along the path B.

5. Device according to claim 2 to 4, **characterised in that** the force-generating element encompasses at least one electrically conductive winding (124) that is supported by the swivel arm (7).

6. Device according to claim 5, **characterised in that** the winding (124) is connected to stationary switching elements (54) for the purpose of controlling the current supply as a function of the position of the swivel arm (7) with respect to the working range.

7. Device according to claim 5 or 6, **characterised in that** there are several windings (124), to which current can be applied individually.

8. Device according to claim 7, **characterised in that** the windings (124) each represent a phase of a multiphase motor (8).

9. Device according to claim 1, **characterised in that** the reversal points (U1 - U2) of the stroke range B can be variably selected within defined ranges (A1 - A10).

10. Device according to one of the previous patent claims, **characterised in that** the swivel arm (7) can be moved or stopped in defined positions within the working range by the motor (8) under controlled conditions for the purpose of executing predefined functions such as starting a process or specific process steps, e.g. bobbin changing or thread catching, if it is used as traversing device (2).

11. Device according to claim 1, **characterised in that** there are auxiliary ranges (A1 - A10) within the working range for providing supportive positive or negative acceleration.

12. Device according to claim 11, **characterised in that** the positive or negative acceleration takes place by contactless, preferably electromagnetic means.

13. Device according to one of the previous patent claims, **characterised in that** this type of linear motor is limited to parts of the working range where acceleration or deceleration is necessary for the purpose of supporting the standard drive, such as a servomotor, stepper motor or linear motor (8).

14. Device according to one of the Patent Claims 1 to 12, **characterised in that** this type of linear motor extends over the entire working range and is designed as a stand-alone drive unit.

15. Device according to claim 1, **characterised in that** the element for generating an electric field encloses a coil (50) that can be shortcircuited or connected to a power source (56) via a switch (54).

16. Device according to at least one of the previous patent claims designed as a traversing device (2) of a spooling for winding machine (1) for traversing the thread along a stroke range (H; B), **characterised in that** a control facility (12) can optionally guide the swivel arm (7) and therefore the thread also outside the stroke range (H, B) for predefined functions.

17. Device according to claim 16, **characterised in that** the control facility controls the drive unit (42) such that the swivel arm (7) can be moved for the purpose of forming a bobbin (3) within the stroke range in accordance with a specified program and can be stopped within and/or outside the stroke range for the drawing-in and bobbin change procedures.

18. Device according to claim 17, **characterised in that** the swivel arm (7) can be stopped outside the stroke range in a position (A, Fig. 2) for the purpose of catching the thread with a catcher blade or a catcher slot of a new tube (4) and in a further position (B, Fig. 2) located in the vicinity of the bobbin (3) on the tube (4) for forming a thread reserve.

19. Device according to claim 17 or 18, **characterised in that** the control facility (12) can stop the thread guide (7; 106) also within the stroke range (H, B) for the purpose of forming an end bead on the finished bobbin.

20. Device according to claims 16 to 19, **characterised in that** a variable pivot angle and therefore variable reversal points (A, B, C, A1 - A10) can be selected in accordance with the control facility (12) for the swivel arm (7) for optimally forming the bobbin (3).

21. Device according to one of the previous patent claims, **characterised in that** a guide straightedge (6) is provided for guiding the traversing thread and that the guide straightedge (6) exhibits a particular form for guiding the thread within or outside the stroke range.

22. Device according to one of the previous patent claims, **characterised in that** the control facility (12) for guiding the thread within and outside the stroke range (H, B) exhibits a predefined control program corresponding to the structure of the bobbin (3) the drawing-in and the bobbin change.

23. Traversing according to claim 1, **characterised by** a rotary retaining fixture (9) for a swivel arm (7), a drive unit (8, 42) for rotating the retaining fixture about a defined rotary axis (D), a programmable logic control (12) for the drive unit (8, 42) and a sensor element (10), whose output signal is dependent on the angular position of the retaining fixture as well as by the fact that positions such as the reversal points U1 and U2 for the rotary motion of the retaining fixture can be defined in the control facility (12) and that, based on the defined positions and the position data supplied by the sensor element (10), the control facility is able to control the drive unit (8, 42) in such a way that the swivel arm (7) can be moved between the defined positions (U1, U2, A1, A10) or can be stopped at a defined position (A, B, C).

## Revendications

1. Dispositif de va-et-vient pour la pose d'un fil lors de la formation de bobines avec un bras oscillant (7) déplaçable dans une zone de travail, lequel comporte un guide-fils (106) et lequel est approprié pour déplacer ledit guide-fils (106) en va-et-vient via une course (H, B), **caractérisé en ce que** le bras oscillant (7) est doté d'au moins un élément (50), qui coopère avec un moyen (49) générateur de champ afin de constituer une sorte de moteur linéaire, de telle manière que s'exerce directement sur le bras oscillant (7) une force déplaçant et/ou freinant ledit bras oscillant (7) comme force auxiliaire ou force unique, sachant que la zone de travail du bras oscillant est une course et que d'autres positions pour l'immobilisation du bras oscillant (7) sont prévues au sein ou en dehors de la zone de travail.

2. Dispositif de va-et-vient selon la revendication de brevet 1, **caractérisé en ce qu'**il est prévu un moyen stationnaire (49) destiné à générer une voie B en la forme d'un champ magnétique et que le bras oscillant (7) est doté d'un moyen générateur de force (50), lequel peut coopérer avec le champ magnétique pour déplacer le bras oscillant (7) le long de la voie dans une zone de travail prédéfinie (U1, U2) ou immobiliser ledit bras oscillant (7) à des positions prédéfinies (A1 - A10).

3. Dispositif selon la revendication de brevet 2, **caractérisé en ce que** le champ magnétique est généré par des aimants permanents (49).

4. Dispositif selon la revendication de brevet 3, **caractérisé en ce que** les aimants permanents (49) sont répartis l'un près de l'autre le long de la voie B.

5. Dispositif selon l'une quelconque des revendications de brevet 2 à 4, **caractérisé en ce que** le moyen générateur de force comporte au moins une spire conductrice d'électricité (124), laquelle est portée par le bras oscillant (7).

6. Dispositif selon la revendication de brevet 5, **caractérisé en ce que** la spire (124) est reliée à des moyens de commutation (54) pour réguler l'alimentation électrique en fonction de la position du bras oscillant (7) par rapport à la zone de travail.

7. Dispositif selon la revendication de brevet 5 ou 6, **caractérisé en ce qu'**il existe plusieurs spires (124), auxquelles le courant électrique peut être appliqué individuellement.

8. Dispositif selon la revendication de brevet 7, **caractérisé en ce que** les spires (124) représentent chacune une phase d'un moteur polyphasé (8).

9. Dispositif selon la revendication de brevet 1, **caractérisé en ce que** les points de rebroussement (U1, U2) de la course B peuvent être choisis de manière variable au sein de zones prédéfinies (A1 - A10).

10. Dispositif selon l'une quelconque des revendications de brevet précédentes, **caractérisé en ce que** le bras oscillant (7) est déplacé ou immobilisé sous la commande du moteur (8) à des positions prédéfinies au sein de la zone de travail en vue de l'exécution de fonctions prédéterminées, par exemple le démarrage d'un processus, ou d'étapes de processus particulières, par exemple le changement de bobine ou le raccroc du fil, dans le cas où il est utilisé comme dispositif de va-et-vient (2).

11. Dispositif selon la revendication de brevet 1, **caractérisé en ce que** des zones auxiliaires (A1 - A10) sont prévues dans la zone de travail pour une accélération positive ou négative auxiliaire.

12. Dispositif selon la revendication de brevet 11, **caractérisé en ce que** l'accélération positive ou négative s'effectue sans contact, de préférence de manière électromagnétique.

13. Dispositif selon l'une quelconque des revendications de brevet précédentes, **caractérisé en ce que** cette sorte de moteur linéaire est limitée aux zones partielles de la zone de travail, dans lesquelles une accélération ou un freinage auxiliaire est nécessaire en complément de l'entraînement standard, par exemple un servomoteur, un moteur pas à pas ou un moteur linéaire (8).

14. Dispositif selon l'une quelconque des revendications de brevet 1 à 12, **caractérisé en ce que** cette sorte de moteur linéaire s'étend sur la totalité de la zone de travail et qu'elle se présente sous la forme d'un dispositif d'entraînement unique.

15. Dispositif selon la revendication de brevet 1, **caractérisé en ce que** le moyen destiné à générer le champ électrique comporte une spire (50), laquelle peut être court-circuitée ou reliée à une source d'énergie 56 via un commutateur (54).

16. Dispositif selon l'une au moins des revendications de brevet précédentes comme dispositif de va-et-vient (2) d'une machine à bobiner (1) pour le changement du fil le long d'une course (H, B), **caractérisé en ce qu'**une commande (12) peut, au choix, guider le bras oscillant (7) et donc le fil même en dehors de la course (H, B) pour des fonctions prédéfinies.

17. Dispositif selon la revendication de brevet 16, **caractérisé en ce que** la commande commande l'entraînement (42) de telle manière que le bras oscillant (7) puisse être déplacé, suivant un programme prédéfini, au sein de la course pour la formation d'une bobine (3) et qu'il puisse être immobilisé au sein et/ou en dehors de la course pour le rentrage et le changement de bobine.

18. Dispositif selon la revendication de brevet 17, **caractérisé en ce que** le bras oscillant (7) peut être immobilisé en dehors de la course à une position (A, fig. 2) pour le raccroc du fil par un couteau de raccroc ou une fente de raccroc d'une douille (4) et à une autre position (B, fig. 2) disposée près de bobine (3) sur la douille (4) pour la constitution d'une réserve de fil.

19. Dispositif selon la revendication de brevet 17 ou 18, **caractérisé en ce que** la commande (12) peut également immobiliser le guide-fils (7 ; 106) au sein de la course (H, B) pour la formation d'un bourrelet final sur la bobine terminée.

20. Dispositif selon l'une quelconque des revendications de brevet 16 à 19, **caractérisé en ce que** pour la formation optimisée de la bobine, un angle d'orientation variable et donc des points de rebroussement variables (A, B; C, A1 - A10) pour le bras oscillant peuvent être choisis selon la commande (12).

21. Dispositif selon l'une quelconque des revendications de brevet précédentes, **caractérisé en ce qu'**il est prévu une règle-guide (6) pour le guidage du fil changeant et que ladite règle-guide (6) présente respectivement une forme prédéterminée pour le guidage du fil au sein et en dehors de la course.

22. Dispositif selon l'une quelconque des revendications de brevet précédentes, **caractérisé en ce** la commande (12), pour le guidage du fil au sein et en dehors de la course (H, B), comporte un programme de commande correspondant respectivement à la formation de la bobine (3), au rentrage et au changement de bobine.

23. Dispositif de va-et-vient croisé selon la revendication de brevet 1, **caractérisé par** la fixation rotative (9) pour un bras oscillant (7), une commande (8, 42) pour la rotation de la fixation autour d'un axe de rotation prédéterminé (D), une commande programmable (12) pour l'entraînement (8, 42) et un moyen capteur (10), dont le signal de sortie dépend de la position angulaire de la fixation, ainsi qu'en ce que les positions, par exemple les points de rebroussement U1 et U2 pour le mouvement de rotation de la fixation, peuvent être déterminées dans la commande (12) et qu'au moyen des positions prédéterminées et des données de positions fournies par le moyen capteur (10), la commande est capable de commander l'entraînement (8, 42) de telle manière que le bras oscillant (7) puisse être déplacé entre les positions prédéterminées (U1, U2, A1, A10) ou immobilisé à une position prédéterminée (A, B, C).
